# FASCICULE DE BREVET EUROPEEN

(11) **EP 3 169 003 B1**
(45) Date de publication et mention de la délivrance du brevet: **23.05.2018**
(21) Numéro de dépôt: 16195099.3
(22) Date de dépôt: 21.10.2016
(51) Int. Cl.: H04B 7/185, H04B 17/10, H04W 72/04, H04W 24/08

(54) **PROCEDE DE CARACTERISATION DES PERFORMANCES D'UNE CHARGE UTILE D'UN SATELLITE EN ORBITE ET SYSTEME DE TEST IOT ASSOCIE**
VERFAHREN ZUR CHARAKTERISIERUNG DER LEISTUNGSDATEN EINER NUTZLAST EINES SATELLITEN IN DER UMLAUFBAHN, UND ENTSPRECHENDES IOT-TEST-SYSTEM
METHOD FOR CHARACTERISING THE PERFORMANCE OF A PAYLOAD OF A SATELLITE IN ORBIT AND ASSOCIATED IOT TESTING SYSTEM

(30) Priorité: 10.11.2015 FR 1502356
(43) Date de publication de la demande: 17.05.2017
(73) Titulaire: Thales, 92400 Courbevoie (FR)
(72) Inventeur: TESSANDORI, Stéphane-Olivier, 06150 Cannes La Bocca (FR); BOUSQUET, Emmanuel, 31037 Toulousse (FR); DURAND, Arnaud-Damien, 31170 Tournefeuille (FR)
(74) Mandataire: Tanguy, Yannick

(56) Documents cités:
- FR-A1- 2 989 545
- FR-A1- 2 995 478
- STANDING A F ED - INSTITUTE OF ELECTRICAL AND ELECTRONICS ENGINEERS: "The techniques and accuracies of in-orbit measurements on satellites", PROCEEDINGS OF SOUTHEASTCON. WILLIAMSBURG, APRIL 7 - 10, 1991; [PROCEEDINGS OF THE SOUTHEAST CONFERENCE], NEW YORK, IEEE, US, vol. -, 7 avril 1991 (1991-04-07), pages 405-409, XP010045130, DOI: 10.1109/SECON.1991.147783 ISBN: 978-0-7803-0033-0

## Description

La présente invention concerne un procédé de caractérisation des performances d'une charge utile d'un satellite en orbite, notamment sur son orbite de service, à l'aide d'une station sol de test IOT (en anglais « In Orbit Testing »). Plus particulièrement, l'invention concerne la caractérisation de l'antenne de réception et/ou de la chaine de transmission de la voie montante de réception de la charge utile testée en orbite de service.

Lorsque le fonctionnement nominal d'une antenne de réception d'un satellite en orbite est testé, le diagramme de rayonnement de l'antenne de réception est testé et comparé à des spécifications de fonctionnement attendu.

L'invention s'applique notamment pour le test en orbite d'un satellite de télécommunication mais également de tout satellite dont la charge utile est composée d'une antenne de réception de voie montante, d'une antenne d'émission de voie descendante, et d'au moins un répéteur transparent (en anglais « bent pipe transponder »), interconnecté entre l'antenne de réception de voie montante et l'antenne d'émission de voie descendante, ou dont la charge utile est composée d'une antenne de réception de voie montante, d'une antenne d'émission et d'au moins répéteur régénératif disposant sur sa chaîne de transmission de voie montante d'au moins une télémesure de puissance représentative de la puissance d'entrée du répéteur.

Les procédés connus de test de la charge utile d'un satellite en orbite sont le plus souvent basés sur l'emploi d'un signal de test sur porteuse non modulée, c'est-à-dire un signal sinusoïdal, parfois appelé porteuse pure. Ce signal de test est généré, amplifié et transmis sur la voie montante au travers d'une station sol munie d'une antenne sol d'émission. La charge utile du satellite réceptionne le signal de test non modulé via une antenne de réception de voie montante, le signal est propagé à travers le répéteur et retransmis à la station sol via une antenne d'émission de voie descendante. A partir des mesures réalisées sur le signal de voie descendante lorsque le répéteur fonctionne en mode linéaire et transparent, il est possible de caractériser la réponse de l'antenne de réception du satellite.

Il est connu également d'employer des signaux de test non modulés pour tester le fonctionnement d'une antenne de réception multifaisceaux ou d'une antenne de réception à plusieurs fréquences sous la forme de signaux de test multi-porteuses, c'est-à-dire en générant en même temps une pluralité de porteuses pures sinusoïdales réparties sur une bande de fréquences. Les demandes de brevet FR 2 995 478 A1 et FR 2 989 545 A1, ainsi que la publication "The techniques and accuracies of in-orbit measurements on satellites", PROCEEDINGS OF SOUTHEASTCON. WILLIAMSBURG, APRIL 7 - 10, 1991 ; [PROCEEDINGS OF THE SOUTHEAST CONFERENCE], NEW YORK, IEEE, US, vol. -, 7 avril 1991, pages 405-409 décrivent des procédés systèmes pour la caractérisation des performances d'une charge utile d'un satellite en orbite à l'aide d'une station sol de test, comme indiqué dans le préambule des revendications indépendantes 1 et 13 de la présente demande. Selon la demande de brevet FR 2 995 478 A1, afin de tester l'antenne de transmission du satellite, du bruit thermique est injecté au niveau de la chaîne de transmission du satellite. Les inconvénients des procédés de test connus, basés sur l'emploi de signaux de test non modulés et décrits ci-dessus, sont multiples.

Un premier problème technique est posé par la limitation du test de l'antenne de réception du satellite à une partie de la zone de couverture de l'antenne d'émission. En effet, pour que la méthode de test puisse être mise en oeuvre, la station sol de test, qui opère à la fois l'émission du signal de test sur la voie montante et l'acquisition du signal retransmis de manière transparente par le satellite sur la voie descendante, doit être positionnée dans la zone d'intersection des zones de couverture de l'antenne de réception et de l'antenne d'émission du satellite. Ainsi, il n'est pas possible de tester l'antenne de réception dans toute sa couverture angulaire.

Un deuxième problème technique est lié à l'emploi de signaux de test destinés à tester le fonctionnement d'une antenne de réception multifaisceaux ou d'une antenne de réception à plusieurs fréquences. Cela nécessite la génération de signaux de test multi-porteuses et un dispositif de génération de ces signaux qui accroit la complexité du système de test.

Enfin et de manière générale, lorsqu'une ou plusieurs porteuses de test non modulées sont émises par la station sol de test, un troisième problème technique est posé par l'existence d'interférences créées par la station sol avec d'autres satellites opérationnels adjacents, qui sont néfastes et intolérables pour ces satellites adjacents en service, et qui nécessitent une coordination globale de fréquences et par conséquent des aménagements spécifiques pour les mesures IOT.

En effet, la densité spectrale de puissance importante d'une ou plusieurs porteuses non modulées qui s'élève à environ 70 dB au dessus de celle d'une porteuse modulée entraîne des contraintes de coordination de fréquences importantes.

Parmi les aménagements spécifiques permettant une coordination globale des fréquences, un premier aménagement consiste à choisir une longitude de Test en Orbite (IOT) du satellite testée, différente de la position orbitale finale de service, de sorte que le satellite testé n'interfère pas avec les satellites en service adjacents. Cette mesure convient parfois et de manière particulière à un satellite géostationnaire.

Un deuxième aménagement des mesures IOT consiste à choisir des créneaux temporels de test la nuit pour limiter les effets des interférences sur les satellites adjacents dont le trafic peut être diminué pendant ces périodes nocturnes.

Un troisième aménagement consiste à réaliser les mesures IOT en utilisant des fréquences de test, décalées par rapport aux fréquences de service du satellite testé, et qui tombent dans les bandes de garde des satellites adjacents.

Toutefois, de tels aménagements sont lourds et longs à mettre en oeuvre, et limitent les mesures IOT que l'on souhaite réaliser en termes de plages des paramètres que l'on souhaite caractériser, du nombre de configurations testés de la charge utile, et de durée des mesures, voir empêchent la réalisation de certaines mesures IOT.

La présente invention vise en premier lieu à pallier aux difficultés posées par le troisième problème technique et à proposer un procédé et un système de test IOT qui permettent simplement de caractériser la charge utile du satellite testé via sa voie montante dans sa position orbitale de service du satellite, en particulier de caractériser le diagramme de rayonnement de l'antenne de réception de voie montante, tout en remplissant les exigences de coordination de fréquences avec les autres satellites adjacents ou plus proches voisins.

De manière supplémentaire et en second lieu, la présente invention vise à pallier aux difficultés posées par les premier et deuxième problèmes techniques, et à proposer un procédé et un système de test IOT qui permettent d'élargir la plage angulaire de caractérisation du diagramme de rayonnement de l'antenne de réception de voie montante, et lorsque plusieurs canaux sont testés en parallèle, lors par exemple de coupes multifréquences de directivité de l'antenne de réception de la charge utile (en anglais « IOT Antenna mapping »), de diminuer la durée des mesures IOT ou la complexité d'un banc de test multi-porteuses spécifique.

A cet effet, l'invention a pour objet un procédé de caractérisation des performances d'une charge utile d'un satellite en orbite à l'aide d'une station sol de test ; la station sol de test comportant des premiers moyens d'amplification radiofréquence, et une antenne sol d'émission radiofréquence avec un premier port d'entrée de l'antenne connecté en sortie des premiers moyens d'amplification radiofréquence ; la charge utile du satellite comportant une première antenne satellite de réception de voie montante, une deuxième antenne satellite d'émission de voie descendante, et un répéteur interconnecté entre la première antenne satellite de réception et la deuxième antenne satellite d'émission ; le répéteur comportant un deuxième port d'entrée radiofréquence connecté à un port de sortie de l'antenne satellite de réception, et des deuxièmes moyens d'amplification, configurés pour amplifier sur une portion d'entrée du répéteur de voie montante ou la totalité du répéteur, des signaux dans une bande de fréquence de réception du répéteur, suivant un mode d'amplification linéaire et avec un gain fixe télécommandable compris dans une plage de gain variant entre un premier gain inférieur Gmin et un deuxième gain supérieur Gmax ; le procédé étant caractérisé en ce qu'il comprend une étape de fourniture consistant à : fournir les premiers moyens d'amplification configurables pour générer en entrée de l'antenne sol d'émission un bruit thermique de test ayant une largeur de bande supérieure ou égale à la bande de réception du répéteur et dont la densité spectrale de puissance est réglable jusqu'à une densité spectrale de puissance de référence Dref de bruit thermique de test telle que le rapport de la densité spectrale du bruit thermique de test, reçu en provenance de la station sol de test lorsque la densité spectrale de bruit thermique qu'elle émet est égale à la densité spectrale de référence Dref, et reçu à l'entrée du répéteur, sur la densité spectrale de bruit thermique plancher généré par le satellite seul en interne et le bruit thermique naturel de la Terre à l'entrée du répéteur est supérieur ou égal à un premier seuil Ds1 égal à 10 dB.

Suivant des modes particuliers de réalisation, le procédé de test IOT comprend l'une ou plusieurs des caractéristiques suivantes :
.- un banc de test, déporté de ou intégré dans la station sol de test, est configuré pour envoyer et recevoir respectivement des télécommandes de configuration au et des télémesures depuis le satellite au travers d'une infrastructure de télécommande et de télémesure, terminée par une station de télécommande et télémesure visible depuis le satellite, et pour envoyer à et recevoir de la station sol de test des commandes de premiers moyens d'amplification et du bruit thermique de test retransmis par le satellite avec ou sans traitement ; et le procédé comprend en outre les étapes consistant à : configurer l'attitude du satellite et/ou de l'antenne satellite de réception pour que l'antenne de réception pointe vers la station sol suivant une position angulaire de pointage de référence ; configurer les deuxièmes moyens d'amplification de la charge utile à un gain fixe prédéterminé qui correspond à un mode de fonctionnement linéaire sur au moins la portion d'entrée du répéteur correspondant à la voie montante ou la totalité du répéteur lorsque le bruit thermique de test reçu en provenance de la station sol et à l'entrée du répéteur correspond à une densité spectrale de bruit thermique de test émis par la station sol égale à la densité spectrale de référence Dref ; configurer les premiers moyens d'amplification de la station sol de test pour générer en entrée de l'antenne sol d'émission un bruit thermique de test ayant une bande couvrant la bande de réception du répéteur, et dont la densité spectrale de puissance est égale à la densité spectrale de référence Dref, et faire transmettre le bruit thermique de test par la station sol de test dans cette configuration des premiers moyens d'amplification; puis acquérir pendant une durée prédéterminée au moins une mesure représentative de la puissance reçue en entrée du répéteur au travers d'au moins une mesure de puissance reçue correspondante soit par la station sol de test au travers de la voie descendante lorsqu'il existe une zone d'intersection des zones de couverture de l'antenne de réception et de l'antenne d'émission du satellite et que la station sol se trouve à l'intérieur de ladite zone d'intersection ; ou soit par des télémesures correspondantes de la puissance captée en un emplacement du répéteur où l'amplification est linéaire et où accessoirement le gain correspondant est connu ;
.- la largeur de la bande du bruit thermique de test émis vers le satellite est comprise entre 30 MHz et 3 GHz ou comprise entre 3% et 10% d'une fréquence centrale de la bande de fréquence d'émission de la station sol de test ou de réception de la charge utile ;
.- la bande de fréquence d'émission de la station sol de test, respectivement de la bande de réception de la charge utile, est comprise dans les bandes L, S, C, X, Q, V, Ku et Ka ;
.- le premier seuil Ds1 de rapport de densité de bruit dépend de la bande de fréquence de réception de la charge utile, de l'orbite du satellite, de la taille de l'antenne d'émission de la station sol de test et du paramètre G/T de la charge utile du satellite testé ;
.- la caractérisation des performances de la charge utile du satellite en orbite de service est comprise dans l'ensemble formé par : la caractérisation mono ou multi-fréquentielle d'un ou plusieurs diagrammes angulaires et/ou d'une ou plusieurs coupes angulaires de rayonnement de l'antenne de réception du satellite lorsque le répéteur de charge utile est un répéteur transparent ou un répéteur régénératif ; la réponse de gain linéaire du port d'entrée au port de sortie du répéteur lorsque le répéteur est un répéteur transparent fonctionnant dans un mode linéaire, et lorsqu'il existe une zone d'intersection des zones de couverture de l'antenne de réception et de l'antenne d'émission du satellite et que la station sol s'y trouve; la variation du gain linéaire du répéteur en fonction de la fréquence dans la bande du répéteur pour un gain fixé du répéteur ; la mesure du flux saturant ou de la densité de flux saturant (SFD) du transpondeur du satellite et la mesure de Puissance d'Emission Isotrope Rayonnée (PIRE) de la charge utile lorsque le répéteur est transparent ; la mesure du G/T de la charge utile avec ou sans visibilité de la voie descendante depuis la station sol ; la caractérisation de la tenue en puissance RF de la charge utile et/ou de la consommation et/ou des performances de la plateforme lorsque la charge utile est chargée par le bruit thermique reçu dans une configuration proche des conditions opérationnelles, par exemple suivant un trafic maximum ou un trafic variable dans le temps ;
.- la caractérisation de la charge utile est la caractérisation d'un diagramme angulaire ou de coupes angulaires de variation de la directivité de l'antenne satellite de réception, et le procédé comprend les étapes consistant à : configurer l'attitude du satellite et/ou de l'antenne satellite de réception pour que l'antenne satellite de réception pointe vers la station sol de test suivant une position angulaire de pointage de référence ; configurer les deuxièmes moyens d'amplification de la charge utile à un premier gain fixe prédéterminé qui correspond à un mode de fonctionnement linéaire sur la portion d'entrée du répéteur correspondant à la voie montante ou la totalité du répéteur lorsque la bruit thermique de test reçu en provenance de la station sol et à l'entrée du répéteur correspond à une densité spectrale de bruit thermique de test émis par la station sol égale à la densité spectrale de référence Dref ; configurer les premier moyens d'amplification de la station sol pour générer en entrée de l'antenne sol d'émission un bruit thermique de test ayant une largeur de bande supérieure ou égale à celle de la bande de réception du répéteur, et dont la densité spectrale de puissance est égale à la densité spectrale de référence Dref ; puis générer pendant une durée prédéterminée par la station sol le bruit thermique de test correspondant à la configuration des premiers moyens d'amplification à la densité spectrale de référence Dref lorsque l'antenne satellite de réception pointe sur la station sol suivant la direction de pointage de référence ; puis mesurer un niveau de référence correspondant à la direction de pointage de référence à partir du signal de bruit thermique de test retransmis par la charge utile suivant la voie descendante et reçu par la station sol au travers d'une antenne sol de réception lorsqu'il existe une zone d'intersection des zones de couverture de l'antenne de réception et de l'antenne d'émission du satellite et que la station sol s'y trouve, ou à partir d'une télémesure du satellite fournissant le niveau de puissance reçu à un emplacement du répéteur où l'amplification est linéaire et où accessoirement le gain jusqu'à cet emplacement connu ; puis par rapport à la direction de pointage de référence, dépointer l'antenne de réception sur un ensemble de positions angulaires de dépointage de l'antenne de réception par rapport à la direction de pointage de référence ; et pour chaque position angulaire de dépointage, générer au sol pendant une durée prédéterminée le bruit thermique de test couvrant la bande de réception du répéteur et correspondant à la configuration des premiers moyens d'amplification à la densité de référence Dref; et mesurer pendant une durée prédéterminée sur une ou plusieurs fréquences de la bande du répéteur, la directivité relative ou le gain relatif de l'antenne satellite de réception par rapport au niveau de référence, correspondant à la position angulaire de dépointage de l'antenne satellite de réception, à partir du signal de bruit thermique de test retransmis par la charge utile suivant la voie descendante et reçu par la station sol au travers d'une antenne sol de réception lorsqu'il existe une zone d'intersection des zones de couverture de l'antenne de réception et de l'antenne d'émission du satellite et que la station sol s'y trouve, ou à partir d'une télémesure du satellite fournissant le niveau de puissance reçu à un emplacement du répéteur où l'amplification linéaire et le gain jusqu'à cet emplacement connu enregistrer les écarts angulaires commandés de dépointage de l'antenne satellite de réception et les mesures de directivité relatives ou de gains relatifs associés ; puis à partir des écarts angulaires commandés de dépointage de l'antenne satellite de réception et les mesures de directivité relatives ou de gains relatifs associés, mono ou multi-fréquentielles, reconstituer un ou plusieurs diagrammes angulaires de variation de la directivité de l'antenne satellite de réception et/ou une ou plusieurs coupes angulaires de variation de la directivité de l'antenne satellite de réception ;
.- le répéteur est un répéteur transparent ; et la caractérisation de la charge utile est la caractérisation de la réponse de gain du répéteur de son extrémité d'entrée à son extrémité de sortie sur la bande de réception du répéteur suivant une commande de gain prédéterminée des deuxièmes moyens d'amplification pour laquelle le répéteur fonctionne en mode linéaire lorsque la station sol de test génère un bruit thermique de test dont la densité spectrale de puissance est égale à la densité spectrale de puissance de référence Dref ; et le procédé comprend les étapes consistant à : pointer l'antenne satellite de réception sur la station sol de test suivant une direction de pointage de référence ; puis configurer les deuxièmes moyens d'amplification pour fixer le gain du répéteur à la valeur de gain prédéterminée compatible d'un fonctionnement linéaire du répéteur lorsque la station sol émet le bruit thermique de test à la densité spectrale de puissance de référence Dref; et configurer les premiers moyens d'amplification de la station sol pour générer un bruit thermique en entrée de l'antenne d'émission couvrant la bande du répéteur et faire varier la densité spectrale de puissance du bruit thermique de test par pas d'une durée prédéterminée dans une plage d'atténuation par rapport à la densité spectrale de référence Dref comprise entre 0 dB et une valeur de recul inférieure ou égal au premier seuil Ds1 ; et sur l'ensemble balayé des densités de puissance du bruit thermique généré par la station, mesurer corrélativement les puissances à l'entrée du répéteur et les puissances correspondantes à la sortie du répéteur et en déduire l'évolution du gain en fonction de la puissance d'entrée du répéteur ;
.- le répéteur est un répéteur transparent ; et la caractérisation de la charge utile est la caractérisation de la réponse du gain en fréquence sur la bande entière du répéteur suivant une même commande de gain prédéterminée appliquée aux deuxièmes moyens d'amplification pour laquelle le répéteur fonctionne en mode linéaire lorsque la station sol génère un bruit thermique de test dont la densité spectrale de puissance est égale à la densité spectrale de puissance de référence Dref ; et le procédé comprend les étapes consistant à : pointer l'antenne satellite de réception sur la station sol de test suivant une direction de pointage de référence ; puis configurer les deuxième moyens d'amplification pour fixer le gain du répéteur à une valeur de gain prédéterminée compatible d'un fonctionnement linéaire du répéteur lorsque la station sol de test émet le bruit thermique de test à la densité spectrale de puissance de référence ; et configurer les premier moyens d'amplification de la station sol de test pour générer un bruit thermique en entrée de l'antenne sol d'émission couvrant la bande de réception du répéteur à la densité spectrale de puissance de référence Dref ; sur un ensemble de fréquences balayées par pas de durée prédéterminée, mesurer corrélativement, les densités spectrales émises et reçues en fonction de la fréquence par la station sol au travers de l'antenne sol de réception lorsqu'il existe une zone d'intersection des zones de couverture de l'antenne de réception et de l'antenne d'émission du satellite et que la station sol s'y trouve ; puis en déduire la variation de gain en fonction de la fréquence dans la bande de réception du répéteur ;
.- le répéteur est un répéteur transparent; et la caractérisation de la charge utile est la caractérisation du flux saturant ou de la densité de flux saturant (SFD) du répéteur du satellite et/ou de la mesure de Puissance d'Emission Isotrope Rayonnée (PIRE) de la charge utile ; et le procédé comprend les étapes consistant à : pointer l'antenne de réception du satellite sur la station sol suivant une direction de pointage de référence ; puis configurer les deuxièmes moyens d'amplification pour faire fonctionner le répéteur dans un régime d'amplification linéaire lorsque la densité spectrale de puissance du bruit thermique de test injecté en entrée de l'antenne sol d'émission est inférieure ou égale à la densité spectrale de puissance de référence Dref ; configurer les premiers moyens d'amplification de la station sol pour générer un bruit thermique de test en entrée de l'antenne sol d'émission couvrant la bande de réception du répéteur et faire varier la densité spectrale de puissance de bruit thermique de test par pas de durée prédéterminée dans une plage d'atténuation par rapport à la densité spectrale de référence Dref comprise entre 0 dB et une valeur de recul inférieure ou égal au premier seuil Ds1 ; et sur l'ensemble balayé des densités de puissance du bruit thermique généré par la station sol mesurer corrélativement soit les puissances d'entrée et de sortie correspondantes du répéteur au travers des télémesures satellite, ou soit les puissances d'entrée du répéteur au travers de mesure au niveau de la station sol ou au travers de la télémesure satellite et les puissances correspondantes reçues par la station sol au travers de l'antenne sol de réception lorsqu'il existe une zone d'intersection des zones de couverture de l'antenne de réception et de l'antenne d'émission du satellite et que la station sol se trouve dans ladite zone d'intersection, et en déduire l'évolution de la Puissance d'Emission Isotrope Rayonnée (PIRE) de la charge utile en fonction de la puissance d'entrée reçue par le répéteur sur une première plage d'observation ; et/ou le procédé comprend les étapes consistant à : configurer les premiers moyens d'amplification pour fixer la densité spectrale du bruit thermique de test injecté en entrée de l'antenne sol d'émission et couvrant la bande totale du répéteur à la densité spectrale de puissance de référence Dref ; puis configurer les deuxièmes moyens d'amplification du répéteur en faisant varier par pas de durée prédéterminée le gain linéaire du répéteur dans une plage de gains du répéteur comprise entre la première valeur de gain inférieure Gmin et la deuxième valeur de gain supérieure Gmax pour faire fonctionner le répéteur dans un mode non linéaire dans lequel un amplificateur de haute puissance formant une extrémité des deuxièmes moyens d'amplification est comprimé; et sur l'ensemble balayé des commande de gains linéaires du répéteur mesurer corrélativement soit les puissances d'entrée et de sortie correspondantes du répéteur au travers des télémesures satellite, ou soit les puissances d'entrée du répéteur au travers de mesure au niveau de la station sol ou au travers de la télémesure satellite et les puissances correspondantes reçues par la station sol au travers de l'antenne sol de réception lorsqu'il existe une zone d'intersection des zones de couverture de l'antenne de réception et de l'antenne d'émission du satellite et que la station sol se trouve dans ladite zone d'intersection, et en déduire l'évolution de la Puissance d'Emission Isotrope Rayonnée (PIRE) de la charge utile en fonction du gain du répéteur et de la puissance d'entrée reçue en entrée du répéteur correspondant à une densité spectrale du bruit thermique de test émis au sol égale à la densité spectrale de référence Dref et/ou la densité de flux saturant (SFD) ;
.- la caractérisation de la charge utile est une mesure du G/T dans lequel G désigne le gain de l'antenne et T désigne la température de bruit ramenée en entrée du répéteur ; et lorsque le répéteur est transparent et qu'il existe pas d'intersection entre la couverture montante et la couverture descendante ou le répéteur est régénératif, le procédé comprend les étapes consistant à : pointer l'antenne de réception du satellite sur la station sol suivant une direction de pointage de référence ; éteindre ou laisser éteinte l'émission de signaux radioélectriques par la station sol; puis configurer les deuxième moyens d'amplification du répéteur à une valeur de gain compatible d'un fonctionnement linéaire du répéteur et d'une mesure de bruit au travers d'une télémesure satellite ; puis mesurer le bruit thermique N1 propre au répéteur présent en entrée du répéteur au travers de la télémesure d'entrée du répéteur ; puis activer la station sol et configurer les premiers moyens d'amplification pour générer un bruit thermique de test dont la densité spectrale mesurée au sol est supérieure ou égale à la densité de référence Dref; puis mesurer un bruit thermique reçu N2 en provenance de la station sol et en entrée du répéteur dans la bande de réception du répéteur au travers de la télémesure d'entrée du répéteur ; déterminer le rapport G/T à partir du rapport du bruit thermique reçu N2 sur le bruit thermique propre N1 du répéteur ;
.- la caractérisation de la charge utile est une mesure du G/T dans lequel G désigne le gain de l'antenne et T désigne la température de bruit ramenée en entrée du répéteur ; et lorsque le répéteur est transparent et qu'il existe une intersection entre la couverture montante et la couverture descendante, le procédé de mesure du G/T comprend les étapes consistant à : pointer l'antenne de réception du satellite sur la station sol suivant une direction de pointage de référence ; éteindre ou laisser éteinte l'émission de signaux radioélectriques par la station sol ; puis configurer les deuxièmes moyens d'amplification du répéteur à une valeur de gain compatible d'un fonctionnement linéaire du répéteur; puis mesurer le bruit thermique N1 propre sur la voie descendante; puis activer la station sol et configurer les premiers moyens d'amplification pour générer un bruit thermique de test dont la densité spectrale mesurée au sol est supérieure ou égale à la densité de référence Dref; puis mesurer un bruit thermique reçu N2 redescendant ; puis déterminer le rapport G/T à partir du rapport du bruit thermique mesuré N2 sur le bruit thermique propre N1 du répéteur.

L'invention a également pour objet un système pour la caractérisation des performances d'une charge utile d'un satellite en orbite sur une bande de fréquences et sur une voie montante, la charge utile du satellite comportant une première antenne satellite de réception de voie montante, une deuxième antenne satellite d'émission de voie descendante, et un répéteur large bande, interconnecté entre la première antenne satellite de réception et la deuxième antenne satellite d'émission; le répéteur comportant un port d'entrée radiofréquence, connecté à un port de sortie de l'antenne satellite de réception, et des deuxièmes moyens d'amplification, configurés pour amplifier sur une portion d'entrée du répéteur correspondant à la voie montante ou sur la totalité du répéteur, des signaux compris dans la bande de fréquence, suivant un mode d'amplification linéaire et avec un gain fixe télécommandable compris dans un plage de gain variant depuis un premier gain inférieur Gmin et un deuxième gain supérieur Gmax, et le système comprenant : une station sol de test comportant des premiers moyens d'amplification radiofréquence, et une antenne sol d'émission radiofréquence avec un port d'entrée connecté à une sortie de premiers moyens d'amplification; une infrastructure de télécommande et de télémesure de la charge utile et de la plateforme satellite, terminée par une station de télécommande et télémesure visible depuis le satellite; et un banc de test connecté à la station sol de test et à l'infrastructure de télécommande et de télémesure, configuré pour mettre en oeuvre le procédé de caractérisation de la charge utile tel que défini ci-dessus en coordonnant l'envoi de commandes et la réception de signaux à mesurer et/ou de télémesures respectivement envoyés et reçus de la station sol de test et de la station de télécommande et télémesure ; le système étant caractérisé en ce que : les premiers moyens d'amplification de la station sol sont configurables pour générer en entrée de l'antenne sol d'émission un bruit thermique de test ayant une largeur de bande supérieure ou égale à la bande de réception du répéteur, et dont la densité spectrale de puissance est réglable jusqu'à une densité spectrale de puissance de référence Dref telle que le rapport de la densité du bruit thermique de test, reçue en provenance de la station sol de test lorsqu'elle émet est égale à la densité spectrale de référence Dref, et reçu à l'entrée du répéteur, sur la densité spectrale de bruit thermique plancher généré par le satellite seul en interne et par le bruit thermique naturel de la Terre à l'entrée du répéteur, est supérieur ou égal à un premier seuil Ds1 égal à 10 dB.

Suivant des modes particuliers de réalisation, le système pour la caractérisation des performances d'une charge utile comprend l'une ou plusieurs des caractéristiques suivantes :
.- le banc de test comprend des moyens d'acquisition pendant une durée prédéterminée du bruit thermique émis par l'antenne satellite d'émission sur la voie descendante reçu par la station sol de test lorsqu'il existe une zone d'intersection des zones de couverture de l'antenne de réception et de l'antenne d'émission du satellite et que la station sol se trouve à l'intérieur de ladite zone d'intersection, et/ou de télémesures du bruit thermique de test reçu en divers emplacements du répéteur, et de télémesures de la plateforme représentatives de la tenue en puissance RF de la charge utile et/ou de la consommation électrique et/ou des performances thermiques de la plateforme lorsque la charge utile est chargée par un bruit thermique de test dans une configuration proche des conditions opérationnelles, par exemple celle d'un trafic maximum ou un trafic variable dans le temps; des moyens de télécommande de la charge utile et/ou de la plateforme du satellite en orbite de service, pendant ladite durée prédéterminée, pour imprimer un écart angulaire de pointage de l'antenne satellite de réception par rapport à une direction de pointage de référence de variation prédéterminée et/ou pour varier un gain linéaire du répéteur lorsqu'il est dans un mode d'amplification linéaire ou commander un mode d'amplification non linéaire du répéteur en activant une boucle de régulation automatique de gain à l'entrée d'un amplificateur de haute puissance de sortie ; des moyens d'enregistrements des variations commandées par les moyens de telécommande du banc de test ; des moyens de corrélation pour corréler la mesure du signal par l'antenne satellite d'émission sur la liaison descendante du satellite lorsque lorsqu'il existe une zone d'intersection des zones de couverture de l'antenne de réception et de l'antenne d'émission du satellite et que la station sol s'y trouve, et/ou de télémesures du signal de test reçu en divers emplacement du répéteur ; et/ou d'autres paramètres de satellite en relation avec la charge utile représentatifs de la tenue en puissance RF de la charge utile, et des performances en termes de consommation et régulation thermique de la plateforme, et pour en déduire les variations de paramètres mesurés caractérisant la charge utile ou la plateforme en fonction des variations commandés au satellite.

L'invention sera mieux comprise à la lecture de la description de plusieurs formes de réalisation qui va suivre, donnée uniquement à titre d'exemple et faite en se référant aux dessins sur lesquels :
- la Figure 1 est une vue d'un exemple d'architecture d'un système de test IOT selon l'invention configuré pour caractériser les performances de la charge utile d'un satellite évoluant sur son orbite de service ;
- la Figure 2 est une vue d'un exemple simplifiée d'une charge utile testée par le système de test IOT de la Figure 1 ;
- la Figure 3 est une vue d'un exemple simplifié de la station sol de test composant le système de test IOT de la Figure 1 ;
- les Figures 4 et 5 sont des vues comparatives des degrés d'interférences auxquelles sont soumis des systèmes satellites adjacents en service, causées par le satellite testé et le système de test IOT lorsque les signaux de test IOT sont respectivement un ou plusieurs signaux non modulés classiques, eu une signal de bruit thermique large bande selon l'invention ;
- la Figure 6 est un ordinogramme général d'un procédé de caractérisation d'une charge utile selon l'invention, la charge utile étant par exemple celle de la Figure 2 ;
- la Figure 7 est un ordinogramme de la caractérisation d'un ou plusieurs diagrammes de rayonnement et/ou une plusieurs coupes angulaires de rayonnement de l'antenne satellite de réception de la charge utile ;
- la Figure 8 est un ordinogramme de la caractérisation de la réponse de gain du répéteur de son extrémité d'entrée à son extrémité de sortie sur la totalité de la bande de réception du répéteur suivant une commande de gain prédéterminée des deuxièmes moyens d'amplification dans un mode de fonctionnement linéaire du répéteur ;
- la Figure 9 est un ordinogramme de la caractérisation de la réponse du gain en fréquence sur la bande entière du répéteur suivant une même commande de gain prédéterminée appliquée aux deuxièmes moyens d'amplification pour laquelle le répéteur fonctionne en mode linéaire ;
- la Figure 10 est un ordinogramme de la caractérisation du flux saturant ou de la densité de flux saturant (SFD) du répéteur du satellite et/ou de la mesure de Puissance d'Emission Isotrope Rayonnée (PIRE) de la charge utile ;
- la Figure 11 est une vue d'un exemple de l'évolution de la PIRE mesurée sur une charge utile en bande Ka lorsque l'on fait varier les gains de la station sol de test IOT et du répéteur de la charge utile testé suivant le procédé de caractérisation de l'évolution de la PIRE illustré dans la Figure 10
- la Figure 12 est un ordinogramme de la caractérisation du G/T de la charge utile.

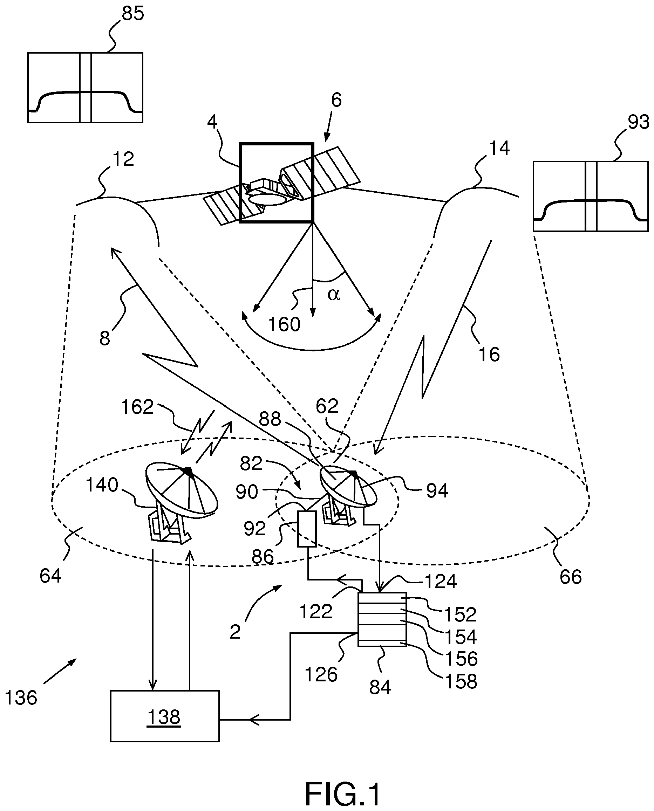

Suivant la Figure 1, un système de test en orbite ou système de test IOT (en anglais « In Orbit Testing ») 2 est configuré pour caractériser des performances d'une charge utile 4 d'un satellite 6 testée sur une bande de fréquences de réception qui est celle d'une voie montante 8. Les tests sont prévus pour être effectués lorsque le satellite testé 6 se trouve sur une orbite prédéterminée, notamment son orbite de service. Ici, le satellite 6 est supposé évoluer sur une orbite géostationnaire.

En variante, le satellite occupe une orbite comprise dans l'ensemble des orbites MEO (en anglais « Médium Earth Orbit »), LEO (en anglais « Low Earth Orbit »).

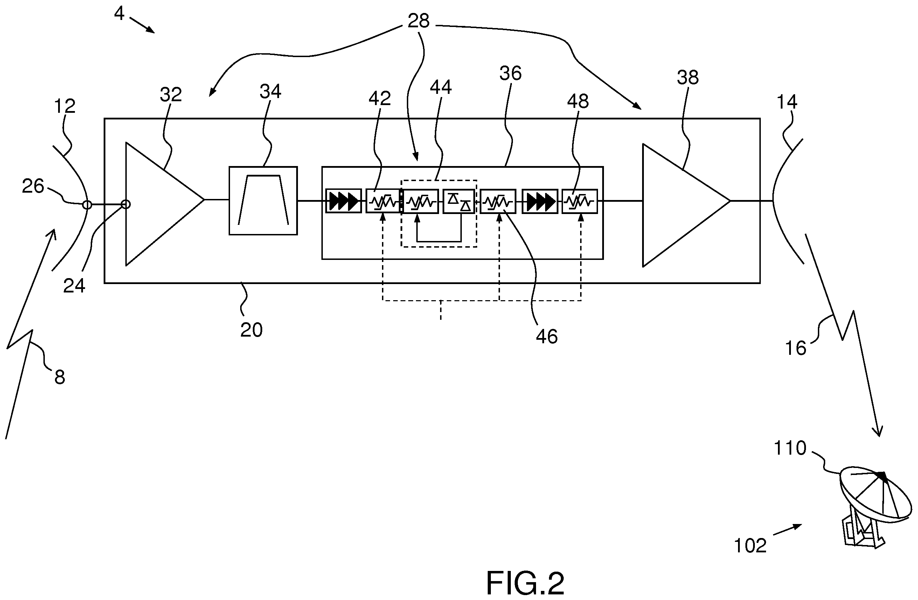

Suivant la Figure 2 et un exemple simplifié de charge utile, la charge utile 4 du satellite 6 comporte une première antenne satellite de réception 12 de voie montante 8, une deuxième antenne satellite d'émission 14 de voie descendante 16, et un répéteur 20, ayant ici une large bande de réception, interconnecté entre la première antenne satellite de réception 12 et la deuxième antenne satellite d'émission 14.

Le répéteur 20 comporte un port d'entrée radiofréquence 24, connecté à un port de sortie 26 de l'antenne satellite de réception 12, et des deuxièmes moyens d'amplification 28, configurés pour amplifier sur une portion d'entrée du répéteur correspondant à la voie montante 8, ou sur la totalité de la chaîne de transmission du répéteur, des signaux compris dans la bande de fréquence de réception du répéteur, suivant un mode d'amplification linéaire et avec un gain fixe télécommandable compris dans une plage de gain variant depuis entre un premier gain inférieur Gmin et un deuxième gain supérieur Gmax.

Les deuxièmes moyens d'amplification 28 comprennent, connectés immédiatement à la sortie de l'antenne satellite de réception 12 un amplificateur faible bruit 32 LNA (en anglais « Low Noise Amplifier), puis en cascade, au travers d'un filtre de canal 34 définissant le répéteur comme un canal de transmission large bande, d'abord une chaine d'amplification intermédiaire 36, puis un amplificateur haute puissance 38 HPA (en anglais « High Power Amplifier »). La charge utile 4 ainsi constituée réalise ici une fonction de répéteur transparent (dénommé en anglais « bent pipe transponder »), selon laquelle le signal reçu sur la voie montante 8 est retransmis amplifié à une transposition en fréquence près du signal dans toute la bande du répéteur sur la voie descendante 16 du satellite 4 via l'antenne satellite d'émission 16. Sur l'exemple de la Figure 2, un seul répéteur est représenté, mais une charge utile peut contenir plusieurs répéteurs associés à plusieurs fréquences de réception et/ou d'émission différentes.

Lorsqu'aucun signal n'est reçu par l'antenne satellite de réception 12, la charge utile 4 génère cependant un bruit qui présente deux composantes principales, une première composante de bruit issu du rayonnement thermique naturel de la Terre, transmis à la charge utile par l'antenne satellite de réception 12 et contenant potentiellement des interférences issues des systèmes satellites adjacents et une seconde composante de bruit thermique généré par le répéteur lui-même, en particulier la chaine de réception faible bruit 32 ou LNA.

On décrit à présent plus en détail un exemple de réalisation de la chaine d'amplification intermédiaire 36 et les configurations respectives associées pour permettre la caractérisation de la charge utile sur une portion du répéteur correspondant à la chaîne de la voie montante, par exemple la caractérisation des performances de l'antenne de réception 12, et pour permettre la caractérisation de la charge utile sur la totalité de la chaine de transmission du répéteur.

La chaine d'amplification intermédiaire 36 comporte au moins un premier amplificateur 42 qui permet d'ajuster le niveau de signal de sortie du filtre de canal 34 pour qu'il soit compatible de la dynamique d'une boucle de contrôle automatique de gain 44 placée en sortie du premier amplificateur 42. La boucle de contrôle automatique de gain 44 permet d'obtenir un signal de niveau constant en entrée d'un second amplificateur 46 qui est apte à amplifier le signal pour atteindre le point de fonctionnement souhaité en entrée de l'amplificateur haute puissance 38. Un troisième amplificateur 48 est présent en sortie du deuxième amplificateur 46 pour compenser les non linéarités en fréquences de l'amplificateur haute puissance 38.

L'exemple de chaine d'amplification intermédiaire 36 décrit à la Figure 2 est donné à titre illustratif et non limitatif. En particulier, d'autres amplificateurs agencés en cascade peuvent être inclus. Par exemple la boucle de Contrôle Automatique de Gain 44 ou boucle CAG 44 peut être optionnelle. La boucle de contrôle automatique de gain 44 peut également être débrayable et permettre lorsqu'elle est débrayée, un fonctionnement dans un mode linéaire à gain commandé et fixé du répéteur, et lorsqu'elle est activée un fonctionnement dans un mode non linéaire du répéteur 20.

Il est à remarquer que lorsque la caractérisation des performances de la charge utile est limitée aux performances liées à la voie montante, comme par exemple le diagramme angulaire de rayonnement de l'antenne satellite de réception, le G/T de la charge utile, le gain linéaire sur une portion d'entrée de la chaine de transmission du répéteur, ou est limité aux performances de la totalité du répéteur lorsqu'il fonctionne dans un mode linéaire, les commandes d'une portion inférieure de la plage de gains télécommandables des deuxièmes moyens d'amplification 36 seront utilisés.

Il est à remarquer que si on dispose d'un premier capteur de mesure de la puissance d'entrée du répéteur et d'un deuxième capteur situé en aval de l'amplificateur faible bruit, par exemple un capteur de la puissance d'entrée de la boucle de contrôle automatique de gain situé en entrée de la boucle CAG, le maintien de l'activité de la boucle de CAG n'empêche pas de mener à bien des mesures de gain linéaire, et la retransmission au sol des télémesures des premier et deuxième capteurs permettra de réaliser ces mesures de gain linéaire.

Il est à remarquer que lorsque de telles télémesures sont disponibles, la caractérisation de performances liées à la voie montante de la charge utile concerne indifféremment un répéteur transparent ou un répéteur régénératif. Il est rappelé qu'un répéteur régénératif décomposable en une chaine de transmission de voie montante incluant une démodulation numérique des signaux reçus de voie montante, et en une chaine de transmission de voie descendante incluant une modulation numérique des signaux envoyés sur la voie descendante

Il est à remarquer que lorsqu'une caractérisation de la voie montante ou du gain linéaire d'un répéteur d'une charge utile transparente est mise en oeuvre à l'aide de mesures réalisées au sol d'un bruit thermique de test retransmis par la charge utile, la configuration du répéteur est celle d'un mode linéaire de fonctionnement, ce qui requiert la désactivation des boucles CAG au sein du répéteur s'il en existe.

Lorsque la caractérisation de la charge utile dans sa totalité est recherchée, comme par exemple l'évolution de la PIRE en fonction de la puissance d'entrée du répéteur et/ou la détermination de la densité de flux saturant SFD, la boucle CAG sera désactivée, et si on dispose d'une dynamique suffisante sur le bruit thermique de test reçu en entrée du répéteur par rapport au bruit plancher du répéteur seul, c'est à dire le bruit propre généré par le répéteur et le bruit thermique naturel de la Terre, une mesure de la PIRE en mode linéaire peut être effectuée. La dynamique est estimée suffisante pour certains types de mesure lorsqu'elle est supérieure ou égale à 10 dB. Cela a pour conséquence de disposer au sol d'un générateur de bruit thermique capable d'émettre une puissance suffisante pour atteindre la valeur maximale de la dynamique en étant compatible du bilan de liaison de la voie montante entre la station sol de test IOT et la charge utile du satellite testé.

Les mesures de la PIRE en mode linéaire pourront être complétées par des mesures de la PIRE en mode non linéaire en fixant le niveau du bruit thermique de test à son niveau maximal et en augmentant progressivement le gain des deuxièmes moyens d'amplification.

La configuration de la charge utile du satellite est réalisée par un centre de contrôle du satellite déporté de la station de test.

Suivant la Figure 1, un zone de couverture, testable sans avoir recours à des télémesures du satellite, représentatives de la puissance de bruit thermique de test retransmise par la charge utile 4 à caractériser, est limitée à une zone d'intersection 62 entre une première zone de couverture de voie montante 64 ou zone de couverture de l'antenne satellite de réception 12 et une deuxième zone de couverture de voie descendante 66 ou zone de couverture de l'antenne satellite d'émission 14.

Lorsqu'une telle zone d'intersection n'existe pas, il convient d'avoir recours à des télémesures du satellite représentatives de manière linéaire de la puissance de bruit thermique de test reçu à dans la bande de réception à l'entrée du répéteur de la charge utile à caractériser pour la caractérisation de l'antenne de réception 12.

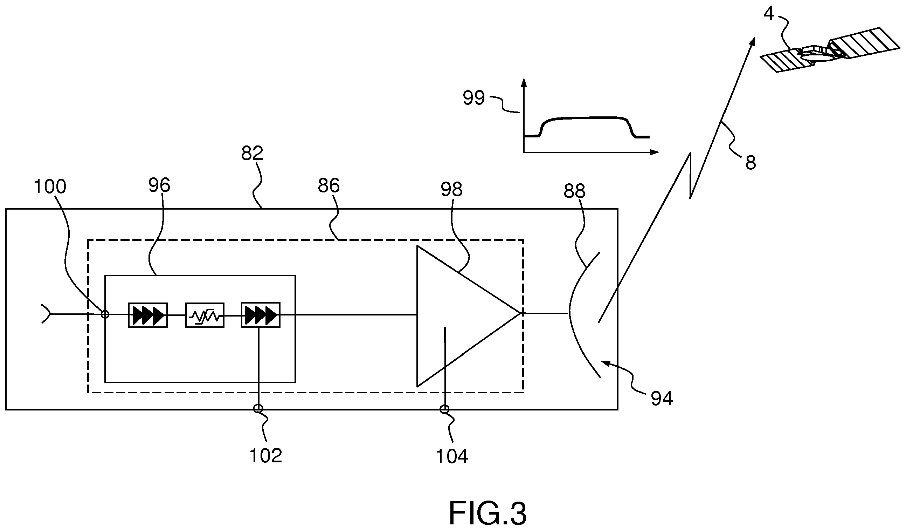

Suivant les Figures 1 et 3, le système de test IOT 2 comprend une station sol de test IOT 82 et un banc de test IOT 84.

La station sol de test 82 est configurée pour générer comme signal de test un signal de bruit thermique large bande, amplifié sur la bande d'utilisation de la voie montante 8 de la charge utile 4 du satellite testé 6 et dont la densité spectrale de puissance est représentée sur un premier spectrogramme 85.

La station sol de test 82 comporte des premiers moyens d'amplification radiofréquence 86, et une antenne sol d'émission 88 radiofréquence avec un port d'entrée 90 de l'antenne 88 connecté à un port de sortie 92 des premiers moyens d'amplification 86.

La station sol de test 82 comporte également une antenne sol de réception 94 qui partage ici le même réflecteur supposé bigrille de l'antenne sol d'émission 88 pour recevoir le bruit thermique de test retransmis par la charge utile 4 sur la voie descendante 16 et dont la densité spectrale de puissance est représentée sur un deuxième spectrogramme 93.

En variante, les antennes sol d'émission et de réception ont chacune un réflecteur distinct.

En variante, la station sol n'utilise pas d'antenne sol de réception lorsqu'il n'existe pas de zone d'intersection entre la première zone de couverture de voie montante et la deuxième zone de couverture de voie descendante.

Les premiers moyens d'amplification 86 de la station sol de test 82 sont configurables pour générer en entrée de l'antenne sol d'émission 88 un bruit thermique de test ayant une largeur de bande au moins égale à la bande de réception du répéteur 20, et la densité spectrale de puissance, c'est-à-dire la densité de puissance par unité de fréquence est réglable jusqu'à une densité spectrale de puissance de bruit thermique de test Dref telle que pour ladite valeur Dref, le rapport de la densité du bruit thermique de test, reçu en provenance de la station sol de test et à l'entrée 24 du répéteur 20, sur la densité de bruit thermique plancher généré par le satellite 4 seul en interne et le bruit thermique naturel de la Terre à l'entrée 24 du répéteur 20 est supérieur ou égal à un premier seuil Ds1 égal à 10 dB.

De manière pratique, la densité spectrale de puissance de bruit thermique de test Dref est limitée de sorte que le rapport de la densité spectrale de puissance du bruit thermique de test, reçu en provenance de la station sol de test et à l'entrée 24 du répéteur 20, sur la densité de bruit thermique plancher généré par le satellite 4 seul en interne et par le bruit thermique naturel de la Terre à l'entrée du répéteur est inférieur ou égal à un deuxième seuil Ds2 égal à 40 dB.

Suivant la Figure 3 et un exemple simplifié de réalisation les premiers moyens d'amplification 86 de la station sol de test 82 comportent en cascade une chaine d'amplificateurs intermédiaires 96 suivi d'un amplificateur haute puissance 98 connecté à l'antenne sol d'émission pour émettre sur la voie montante 8 un bruit thermique de test large bande dont le spectre de puissance est représenté sur un spectrogramme 99.

La chaine d'amplificateurs intermédiaires 96 est alimentée en un port d'entrée 100 par un bruit thermique de test large bande de source.

Le bruit thermique de test est généré à la source en interne par le bruit propre des composants dissipatifs des premiers moyens d'amplification 86 ou par un générateur de bruit externe non représenté sur la Figure 3.

La chaine d'amplificateurs intermédiaires 96 et l'amplificateur haute puissance 98 comportent respectivement un premier port de commande en gain 102 et un deuxième port de commande en gain 104, regroupés pour être connecté au banc de test.

Suivant la Figure 1, le banc de test 84 comporte un premier port d'interface 122 de commande des premiers moyens d'amplification, connecté aux premiers ports de commande en gain regroupés 102 et 104 des premiers moyens d'amplification, et un deuxième port d'interface 124 de mesure directe du bruit thermique de test retransmis par la charge utile 4, connecté à l'antenne sol de réception 94.

Le banc de test 84 comporte également un troisième port d'interface 126, connecté à une infrastructure 136 de télécommande et de télémesure de la charge utile 4 et de la plateforme satellite, formée par exemple par une unité de contrôle et de coordination 138 des télécommandes et des télémesures, et terminée par une station 140 d'accès de télécommande et télémesure, visible depuis le satellite 6.

Le banc de test 84 est configuré pour mettre en oeuvre des tests IOT de caractérisation des performances de la charge utile 4 selon l'invention, en coordonnant l'envoi de commandes au satellite testé et à la station sol de test 82, et la réception de signaux de bruit à mesurer au sol et/ou de télémesures du satellite 4.

Le banc de test 84 comprend des moyens d'acquisition 152 de la puissance de bruit thermique reçu, des moyens de télécommande 154 de la charge utile et/ou de la plateforme du satellite, des moyens d'enregistrements 156, et des moyens de corrélation 158.

Les moyens d'acquisitions 152 sont configurés pour acquérir pendant une durée prédéterminée du bruit thermique de test retransmis par l'antenne satellite d'émission 14 sur la voie des descendante 16 e et reçu par la station sol de test 82 lorsque lorsqu'il existe une zone d'intersection 62 des zones de couverture 64, 66 de l'antenne de réception 12 et de l'antenne d'émission 14 du satellite 6 et que la station sol 82 se trouve à l'intérieur de ladite zone d'intersection 62, et/ou de télémesures du bruit thermique de test reçu en divers emplacements du répéteur 20, et de télémesures de la plateforme représentatives de la tenue en puissance RF de la charge utile et/ou de la consommation électrique et/ou des performances thermiques de la plateforme lorsque la charge utile est chargée par un bruit thermique de test dans une configuration proche des conditions opérationnelles, par exemple celle d'un trafic maximum ou un trafic variable dans le temps.

L'analyse spectrale du signal est réalisée par exemple par un analyseur de spectre, configuré pour effectuer un filtrage passe bas du signal reçu afin de lisser le niveau du signal en supprimant les composantes hautes fréquences. Plusieurs points de mesure successifs sont réalisés au cours d'un balayage temporel.

Les moyens de télécommande 154 sont configurés pour télécommander la charge utile 4 et/ou la plateforme du satellite testé 6 en orbite de service, pendant ladite durée prédéterminée, pour imprimer un écart angulaire de dépointage a de l'antenne satellite de réception par rapport à une direction de pointage de référence 160 de variation prédéterminée et/ou pour varier un gain linéaire du répéteur lorsqu'il est dans un mode d'amplification linéaire ou commander un mode d'amplification non linéaire du répéteur en activant une boucle de régulation automatique de gain à l'entrée d'un amplificateur de haute puissance de sortie.

Le biais ou écart angulaire, imprimé à l'antenne de réception du satellite par rapport à la direction de pointage de référence 160, permet la caractérisation de l'antenne de réception dans sa zone de couverture et d'observer les variations de gain ou de directivité de l'antenne en fonction du temps et par conséquent de l'angle de vue de l'antenne. La commande de dépointage du satellite est réalisée depuis la station d'accès de télécommande et télémesure 140, déporté et distante de la station sol de test IOT 82 via une liaison de télécommande 162.

Les moyens de télécommande 154 sont également configurés pour commander le gain des premier moyens d'amplifications 86 et régler ainsi la densité spectrale de puissance du bruit thermique de test émis en large bande.

Les moyens d'enregistrements 156 sont configurés pour enregistrer des variations commandés par les moyens de commandes du banc de test 84.

Les moyens de corrélation 158 sont configurés pour corréler la mesure du signal par l'antenne satellite d'émission sur la liaison descendante 16 du satellite lorsque lorsqu'il existe une zone d'intersection 62 des zones de couverture de l'antenne de réception et de l'antenne d'émission du satellite et que la station sol de test 82 s'y trouve, et/ou de télémesures du signal de test reçu en divers emplacement du répéteur 20 et/ou d'autres paramètres de satellite en relation avec la charge utile 4, représentatifs de la tenue en puissance RF de la charge utile, et des performances en termes de consommation et régulation thermique de la plateforme, et pour en déduire les variations de paramètres mesurés caractérisant la charge utile 4 ou la plateforme en fonction des variations commandés au satellite 6.

Des moyens de traitement du signal acquis par la station sol de test peuvent être inclus dans la station sol de test ou déportés dans le banc de test pour traiter les mesures représentatives du bruit thermique de test reçu en entrée du répéteur et produire une mesure du diagramme de rayonnement de l'antenne de réception 12 du satellite 6.

Ainsi, le bruit thermique de la station sol de test sur son lien montant 8 est utilisé comme signal de test afin de permettre la réalisation de mesures IOT sur une charge utile 4 en vol sur son orbite de service.

Cette utilisation d'un bruit thermique large bande permet simplement l'accès simultané à tout le plan de fréquence de la charge utile 4 dont la bande occupée possède une largeur pouvant atteindre quelques GHz.

Cette utilisation d'un bruit thermique de test large bande permet encore de faciliter la mise en oeuvre des bancs de test lorsque plusieurs canaux de transmission doivent être testés simultanément dans la bande de fréquence d'un même répéteur ou deux bandes différentes deux répéteurs différents.

Cette utilisation d'un bruit thermique large bande de test permet également par la diminution de la densité spectrale du signal de test de minimiser les contraintes de coordination de fréquence avec d'autres systèmes satellitaires adjacents en service.

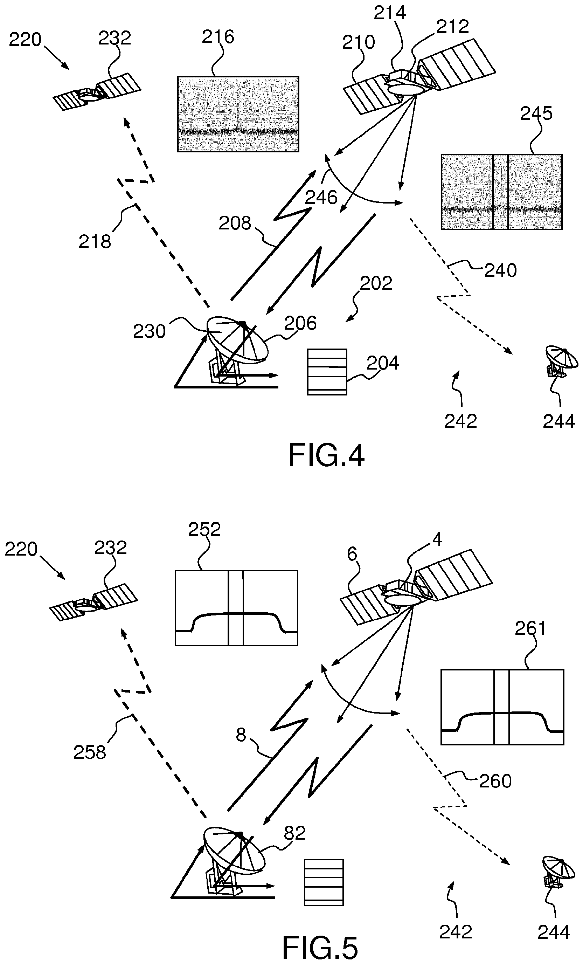

Suivant la Figure 4, les voies possibles d'interférences créées par un système de test IOT classique 202, sont illustrées.

Le système de test IOT classique 202 comporte interconnectés un banc de test 204 et une station sol de test 206.

La station sol de test 206 utilise sur une voie montante 208 d'un satellite testé 210 dont on cherche à cherche à caractériser une charge utile 212 un signal de test non modulé, c'est-à-dire en pratique une porteuse pure, dont le spectre de puissance, reçu à l'entrée 214 d'un répéteur, non représenté, de la charge utile 212, est illustré par un spectrogramme 216.

Une première voie 218 possible d'interférences sur un premier système satellitaire adjacent 220 est une voie montante suivant laquelle une portion du signal de test IOT est émise de la station sol de test 206 au travers d'un lobe secondaire de l'antenne sol d'émission 230 de la station sol 206 vers un satellite adjacent 232 du système satellitaire adjacent 220.

Une deuxième voie 240 possible d'interférences sur un deuxième système satellitaire adjacent 242 pouvant être identique premier système satellitaire adjacent 220 est une voie descendante suivant laquelle une portion du signal de test IOT, retransmise par la charge utile 212 lorsqu'elle est transparente, est reçue par un ou plusieurs terminaux utilisateurs 244 au travers de leur antennes de réception. Le spectre de puissance de la portion du signal de test IOT, retransmise par la charge utile sur la deuxième voie 240 est illustré par un spectrogramme 245. Cette deuxième voie 240 d'interférence peut avoir un effet de brouillage important pour des dépointages 246 imprimés à l'antenne satellite de transmission lors de test de diagrammes ou de coupes angulaires de rayonnement de l'antenne satellite de réception que l'on cherche à caractériser.

Suivant la Figure 5, les voies possibles d'interférences, créées par un système de test IOT 2 selon l'invention comme celui décrit à la Figure 1, sont illustrées.

A l'inverse du système de test IOT classique, la station sol de test 82 utilise sur la voie montante 8 du satellite testé 6 dont on cherche à cherche à caractériser la charge utile 4 un bruit thermique large bande comme signal de test, le spectre de puissance du signal de test, reçu à l'entrée du la charge utile 4, est illustré par un spectrogramme 252.

A l'instar du système IOT classique de la Figure 4, les configurations de voies possibles d'interférence en termes de géométrie, c'est-à-dire les positions des stations, des terminaux, et de satellites, et en termes de diagrammes des antennes sont identiques pour le système de test IOT 2 de l'invention.

Une première voie 258 possible d'interférences sur le premier système satellitaire adjacent 220 est une voie montante suivant laquelle une portion du signal de test IOT est émise de la station sol de test 82 au travers d'un lobe secondaire de l'antenne sol d'émission 88 de la station sol 82 vers le satellite adjacent 232 du système satellitaire adjacent 220.

Une deuxième voie 260 possible d'interférences sur la deuxième système satellitaire adjacent 242 pouvant être identique au premier système satellitaire adjacent 220 est une voie descendante suivant laquelle une portion du signal de test IOT, retransmise par la charge utile 4 transparente, est reçue par un ou plusieurs terminaux utilisateurs 244 au travers de leur antennes de réception. Le spectre de puissance de la portion du signal de test IOT, retransmise par la charge utile sur la deuxième voie 260 est illustré par un spectrogramme 261.

A l'inverse du système de test IOT classique, les niveaux d'interférences créées par le système de test IOT de l'invention sur les deux voies seront significativement plus faibles et sont égaux à l'expression à : P_{CW} - 10*log(B_{WN}), dans laquelle P_{CW} exprimé en dBm est la puissance du signal de test équivalent non modulé et B_{WN} est la bande du bruit de test.

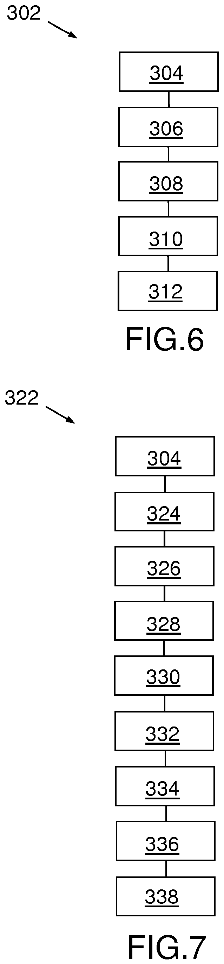

Suivant la Figure 6, un procédé de caractérisation des performances d'une charge utile d'un satellite en orbite 302 est mis en oeuvre par une station sol de test et un banc de test comme ceux décrits par exemple dans les Figures 1 et 3.

De manière générale, pour mettre en oeuvre le procédé de caractérisation 302, la station sol de test comporte des premiers moyens d'amplification radiofréquence, et une antenne sol d'émission radiofréquence avec un premier port d'entrée de l'antenne connectée en sortie de des premiers moyens d'amplification radiofréquence,

Comme décrit sur la Figure 2, la charge utile testée du satellite comporte une première antenne satellite de réception de voie montante, une deuxième antenne satellite d'émission de voie descendante, et un répéteur interconnecté entre la première antenne satellite de réception et la deuxième antenne satellite d'émission.

Le répéteur comporte un deuxième port d'entrée radiofréquence connecté à un port de sortie de l'antenne satellite de réception, et des deuxièmes moyens d'amplification, configurés pour amplifier sur une portion d'entrée du répéteur ou la totalité du répéteur, des signaux dans bande de fréquence du répéteur, suivant un mode d'amplification linéaire et avec un gain fixe télécommandable compris dans une plage de gain variant entre un premier gain inférieur Gmin et un deuxième gain supérieur Gmax.

De manière générale, le procédé de caractérisation de la charge utile 302 comprend une première étape de fourniture 304 consistant à fournir les premiers moyens d'amplification configurables pour générer en entrée de l'antenne sol d'émission un bruit thermique de test ayant une largeur de bande au moins égale à la bande du répéteur et dont la densité spectrale de puissance est réglable jusqu'à une densité spectrale de puissance de référence Dref de bruit thermique de test telle que le rapport de la densité du bruit thermique de test, reçu en provenance de la station sol de test lorsque la densité spectrale de bruit thermique de test qu'elle émet est égal à la densité spectrale de référence Dref et reçu à l'entrée du répéteur, sur la densité spectrale de bruit thermique plancher généré par le satellite seul en interne et par le bruit thermique naturel de la Terre à l'entrée du répéteur est supérieur ou égal à un premier seuil Ds1 égal à 10 dB.

Le premier seuil Ds1 de densité du bruit thermique de test dépend de la bande de réception de la charge utile, de l'orbite du satellite, de la taille de l'antenne d'émission de la station sol de test et du paramètre G/T de la charge utile du satellite.

Des bilans de liaisons sont données à titre indicatif ci-dessous sous la forme de trois tableaux 1, 2, 3 qui montrent qu'une valeur de premier seuil Ds1 égale à 10 dB convient pour couvrir une large gamme de charges utiles de satellites testés en termes d'orbites de service du satellite et de bandes de réception de la charge utile.

Le tableau 1 décrit trois bilans de liaison typiques pour les bandes C, Ku et Ka lorsque le satellite décrit une orbite géostationnaire GEO (en anglais Geostationnary Earth Orbit).

Le tableau 2 décrit trois bilans de liaison typiques pour les bandes C, Ku et Ka lorsque le satellite décrit une orbite intermédiaire MEO (en anglais Médium Earth Orbit).

Le tableau 3 décrit trois bilans de liaison typiques pour les bandes C, Ku et Ka lorsque le satellite décrit une orbite basse LEO (en anglais Low Earth Orbit).

Suivant les tableaux 1 à 3, la densité spectrale de puissance du bruit thermique de test, correspondant à un premier seuil Ds1 de 10 dB et généré à l'entrée de l'antenne d'émission de la station sol de test, est compris entre -82 dBm/Hz et -60 dBm/Hz en bande Ka, entre -68 dBm/Hz et -46 dBm/Hz en bande Ku, et entre -67 dBm/Hz et -44 dBm/Hz en bande C.

La bande de fréquence d'émission de la station sol, respectivement de la bande de réception de la charge utile, est comprise dans les bandes L, S, C, X, Q, V, Ku et Ka.

La largeur de la bande du bruit thermique de test émis vers le satellite est comprise entre 250 MHz et 3 GHz ou comprise entre 3% et 10% d'une fréquence centrale de la bande de fréquence d'émission de la station ou de réception du satellite.

**Tableau 1**

| | | GEO (36000 km) | | |
|---|---|---|---|---|
| | | Ka | Ku | C |
| puissance du bruit de sortie de la G/S | dBm | 35 | 49 | 51 |
| Densité du bruit de sortie de la G/S | dBm/Hz | -60 | -46 | -44 |
| Puissance de bruit / 4kHz | dBm/4kHz | -24 | -10 | -8 |
| Diamètre de l'antenne émission G/S | M | 9 | 9 | 11 |
| Gain de l'antenne émission G/S | dBi | 67 | 61 | 55 |
| Densité de la PIRE en bruit de la G/S par 4 kHz | dBW/Hz | 14 | 21 | 17 |
| Densité de la PIRE en bruit de la G/S par Hz | dBW/Hz | -22 | -15 | -19 |
| Densité de la PIRE en bruit de la G/S par GHz | dBW/1 GHz | 68 | 75 | 71 |
| Distance Sat-G/S | Km | 36000 | 36000 | 36000 |
| Pertes de propagation de diffusion dans l'espace | dB | 162 | 162 | 162 |
| Densité de flux de puissance du bruit de la station sol G/S | dBW/Hz/m² | -185 | -177 | -181 |
| Fréquence de la bande | MHz | 30000 | 14000 | 6000 |
| Isotropique | dBm² | -51 | -44 | -37 |
| Gain typique d'antenne de réception satellite | dBi | 45 | 30 | 25 |
| G/T de la charge utile du satellite | dB/K | 18 | 3 | -2 |
| Densité de bruit de la station sol reçu à l'entrée du répéteur | dBm/Hz | -160 | -161 | -162 |
| Densité de bruit de la charge utile | dBm/Hz | -171 | -172 | -173 |
| Densité totale de bruit | dBm/Hz | -161 | -162 | -163 |
| Ecart bruit de la station sol reçu / bruit propre de la charge utile | dB | 10 | 10 | 10 |

**Tableau 2**

| | | MEO (8000 km) | | |
|---|---|---|---|---|
| | | Ka | Ku | C |
| puissance du bruit de sortie de la G/S | dBm | 29 | 43 | 45 |
| Densité du bruit de sortie de la G/S | dBm/Hz | -66 | -52 | -50 |
| Puissance de bruit / 4kHz | dBm/4kHz | -30 | -16 | -14 |
| Diamètre de l'antenne émission G/S | M | 7 | 7 | 9 |
| Gain de l'antenne émission G/S | dBi | 65 | 58 | 53 |
| Densité de la PIRE en bruit de la G/S par 4 kHz | dBW/Hz | 5 | 13 | 10 |
| Densité de la PIRE en bruit de la G/S par Hz | dBW/Hz | -31 | -23 | -26 |
| Densité de la PIRE en bruit de la G/S par GHz | dBW/1 GHz | 59 | 67 | 64 |
| Distance Sat-G/S | Km | 8000 | 8000 | 8000 |
| Pertes de propagation de diffusion dans l'espace | dB | 149 | 149 | 149 |
| Densité de flux de puissance du bruit de la station sol G/S | dBW/Hz/m² | -180 | -172 | -176 |
| Fréquence de la bande | MHz | 30000 | 14000 | 6000 |
| Isotropique | dBm² | -51 | -44 | -37 |
| Gain typique d'antenne de réception satellite | dBi | 40 | 25 | 20 |
| G/T de la charge utile du satellite | dB/K | 13 | -2 | -7 |
| Densité de bruit de la station sol reçu à l'entrée du répéteur | dBm/Hz | -161 | -162 | -163 |
| Densité de bruit de la charge utile | dBm/Hz | -171 | -172 | -173 |
| Densité totale de bruit | dBm/Hz | -160 | -161 | -162 |
| Ecart bruit de la station sol reçu / bruit propre de la charge utile | dB | 10 | 10 | 10 |

**Tableau 3**

| | | LEO (1200 km) | | |
|---|---|---|---|---|
| | | Ka | Ku | C |
| puissance du bruit de sortie de la G/S | dBm | 12.5 | 26.5 | 28 |
| Densité du bruit de sortie de la G/S | dBm/Hz | -82 | -68 | -67 |
| Puissance de bruit / 4kHz | dBm/4kHz | -46 | -32 | -31 |
| Diamètre de l'antenne émission G/S | M | 7 | 7 | 9 |
| Gain de l'antenne émission G/S | dBi | 65 | 58 | 53 |
| Densité de la PIRE en bruit de la G/S par 4 kHz | dBW/Hz | -11 | -4 | -7 |
| Densité de la PIRE en bruit de la G/S par Hz | dBW/Hz | -47 | -40 | -43 |
| Densité de la PIRE en bruit de la G/S par GHz | dBW/1 GHz | 43 | 50 | 47 |
| Distance Sat-G/S | Km | 1200 | 1200 | 1200 |
| Pertes de propagation de diffusion dans l'espace | dB | 133 | 133 | 133 |
| Densité de flux de puissance du bruit de la station sol G/S | dBW/Hz/m² | -180 | -172 | -176 |
| Fréquence de la bande | MHz | 30000 | 14000 | 6000 |
| Isotropique | dBm² | -51 | -44 | -37 |
| Gain typique d'antenne de réception satellite | dBi | 40 | 25 | 20 |
| G/T de la charge utile du satellite | dB/K | 13 | -2 | -7 |
| Densité de bruit de la station sol reçu à l'entrée du répéteur | dBm/Hz | -161 | -162 | -163 |
| Densité de bruit de la charge utile | dBm/Hz | -171 | -172 | -173 |
| Densité totale de bruit | dBm/Hz | -160 | -161 | -163 |
| Ecart bruit de la station sol reçu / | dB | 10 | 10 | 10 |
| bruit propre de la charge utile | | | | |

De manière supplémentaire, la densité spectrale de référence Dref de bruit thermique de test est telle que le rapport de la densité du bruit thermique de test, reçu en provenance de la station sol de test lorsque la densité de bruit thermique qu'elle émet est égal à la densité spectrale de référence Dref et reçu à l'entrée du répéteur, sur la densité de bruit thermique plancher généré par le satellite seul en interne et le bruit thermique naturel de la Terre à l'entrée du répéteur est inférieur ou égal à un deuxième seuil Ds2 égal à 40 dB.

De manière générale, la station sol de test comprend un port d'interface pour envoyer et recevoir respectivement des télécommandes de configuration au et des télémesures depuis le satellite au travers d'une infrastructure de télécommande et de télémesure, terminée par une station de télécommande et télémesure visible depuis le satellites du satellite et de la charge utile.

Dans ce cas général, le procédé de caractérisation 302 comprend les étapes supplémentaires suivantes.

Dans une deuxième étape 306, l'attitude du satellite et/ou de l'antenne satellite de réception est configurée par télécommande pour que l'antenne satellite de réception pointe vers la station sol suivant une position angulaire de pointage de référence.

Puis, dans une troisième étape 308 les deuxièmes moyens d'amplification 28 de la charge utile sont configurés par télécommande à un gain fixe prédéterminé qui correspond à un mode de fonctionnement linéaire sur au moins la portion d'entrée du répéteur ou la totalité du répéteur lorsque le bruit thermique de test reçu en provenance de la station sol et à l'entrée du répéteur correspond à une densité spectrale de bruit thermique de test émis par la station sol égale à la densité de référence Dref.

Ensuite, dans une quatrième étape 310, les premiers moyens d'amplification 86 de la station sol de test 82 sont configurés par une commande en provenance du banc de test 84 pour générer en entrée de l'antenne sol d'émission 82 un bruit thermique de test ayant une largeur de bande au moins égale à la bande de réception du répéteur 20, et dont la densité spectrale de puissance est égale à la densité spectrale de référence Dref, et faire transmettre le bruit thermique de test par la station sol 82 dans cette configuration des premiers moyens d'amplification 36.

Puis, dans une cinquième étape 312, pendant une durée prédéterminée au moins une mesure représentative de la puissance reçue en entrée du répéteur est acquise au travers d'au moins une mesure de puissance reçue correspondante. L'au moins une mesure est acquise, soit par la station sol de test 82 au travers de la voie descendante 16 lorsqu'il existe une zone d'intersection 62 des zones de couverture de l'antenne de réception et de l'antenne d'émission du satellite et que la station sol de test 82 se trouve à l'intérieur de ladite zone d'intersection 62, ou soit par des télémesures correspondantes de la puissance captée en un emplacement du répéteur où l'amplification est linéaire.

De manière particulière, la caractérisation des performances de la charge utile du satellite en orbite mise en oeuvre par le procédé général de caractérisation 302 est comprise dans l'ensemble formé par :
.- la caractérisation du diagramme angulaire et/ou de coupes angulaires de rayonnement de l'antenne de réception du satellite lorsque le répéteur de charge utile est un répéteur transparent ou un répéteur régénératif ;
.- la réponse de gain linéaire dans la bande du répéteur du port d'entrée au port de sortie du répéteur lorsque le répéteur est un répéteur transparent fonctionnant dans un mode linéaire, et lorsqu'il existe une zone d'intersection des zones de couverture de l'antenne de réception et de l'antenne d'émission du satellite et que la station sol s'y trouve;
.- la variation du gain linéaire du répéteur en fonction de la fréquence dans la bande du répéteur pour un gain fixé du répéteur ;
.- la mesure du flux saturant ou de la densité de flux saturant (SFD) du transpondeur du satellite et la mesure de Puissance d'Emission Isotrope Rayonnée (PIRE) de la charge utile lorsque le répéteur est transparent ;
.- la mesure du G/T de la charge utile avec ou sans visibilité de la voie descendante depuis la station sol lorsque le répéteur est un répéteur transparent ou un répéteur régénératif;
.- la caractérisation de la tenue en puissance RF de la charge utile et/ou de la consommation et/ou des performances de la plateforme lorsque la charge utile est chargée par le bruit thermique de test reçu dans une configuration proche des conditions opérationnelles, par exemple suivant un trafic maximum ou un trafic variable dans le temps.

Suivant la Figure 7 et un deuxième mode de réalisation particulier de l'invention, la caractérisation de la charge utile concerne la caractérisation d'un diagramme angulaire ou de coupes angulaires de variation de la directivité de l'antenne satellite de réception 12. Un procédé de caractérisation de cette performance 322 comprend la première étape 304 et un ensemble d'étapes 324, 326, 328, 330, 332, 334, 336, 338.

Dans l'étape 324, l'attitude du satellite et/ou de l'antenne satellite de réception (cas d'une antenne mobile par rapport à la plateforme dont l'attitude est contrôlable par rapport à cette dernière) est configurée par télécommande pour que l'antenne satellite de réception pointe vers la station sol de test 82 suivant une position angulaire de pointage de référence.

Dans l'étape 326, les deuxièmes moyens d'amplification 28 de la charge utile sont configurés par télécommande à un premier gain fixe prédéterminé qui correspond à un mode de fonctionnement linéaire sur une portion d'entrée du répéteur correspondant à la voie montante (cas d'un répéteur transparent et d'un répéteur régénératif) ou sur la totalité du répéteur (cas d'un répéteur transparent avec absence ou désactivation d'une boucle CAG) lorsque le bruit thermique de test reçu en provenance de la station sol et à l'entrée du répéteur correspond à une densité spectrale de bruit thermique de test émis par la station sol 82 égale à la densité spectrale de référence Dref.

Puis, dans l'étape 328 les premiers moyens d'amplification 86 de la station sol 82 sont commandés par le banc de test 84 pour générer en entrée de l'antenne sol d'émission un bruit thermique de test ayant une largeur de bande supérieure ou égale à la bande de réception du répéteur, et dont la densité spectrale est égale à la densité spectrale de référence Dref.

Ensuite, dans l'étape 330 la station sol 82 génère pendant une durée prédéterminée le bruit thermique de test correspondant à la configuration des premiers moyens d'amplification 86 à la densité spectrale de référence Dref lorsque l'antenne satellite de réception 12 pointe sur la station sol 82 suivant la direction de pointage de référence.

Puis, dans l'étape 332 un niveau de référence correspondant à la direction de pointage de référence est mesuré, à partir du signal de bruit thermique de test retransmis par la charge utile 4 suivant la voie descendante 16 et reçu par la station sol 82 au travers d'une antenne sol de réception lorsqu'il existe une zone d'intersection 62 des zones de couverture de l'antenne de réception et de l'antenne d'émission du satellite et que la station sol 82 s'y trouve, ou à partir d'une télémesure du satellite fournissant le niveau de puissance reçu à un emplacement du répéteur où l'amplification est linéaire et où accessoirement le gain jusqu'à cet emplacement connu.

Puis, dans l'étape 334, l'antenne de réception est dépointée par rapport à la direction de pointage de référence sur un ensemble de positions angulaires de dépointage de l'antenne de réception.

Dans la même étape 334, pour chaque position angulaire de dépointage, le bruit thermique de test couvrant la bande de réception du répéteur et correspondant à la configuration des premiers moyens d'amplification 86 à la densité spectrale de référence Dref est généré au sol pendant une durée prédéterminée, et pendant une durée prédéterminée, sur une ou plusieurs fréquences de la bande du répéteur, est mesurée la directivité relative ou le gain relatif de l'antenne satellite de réception 12 par rapport au niveau de référence, correspondant à la position angulaire de dépointage de l'antenne satellite de réception. Les mesures de la directivité relative ou le gain relatif de l'antenne satellite de réception par rapport à la directivité de référence ou le gain de référence sont réalisées à partir du signal de bruit thermique de test retransmis par la charge utile 4 suivant la voie descendante 16 et reçu par la station sol au travers d'une antenne sol de réception lorsqu'il existe une zone d'intersection 62 des zones de couverture de l'antenne de réception et de l'antenne d'émission du satellite et que la station sol 82 s'y trouve, ou à partir d'une télémesure du satellite fournissant le niveau de puissance reçu à un emplacement du répéteur où l'amplification est linéaire et où accessoirement le gain jusqu'à cet emplacement est connu.

En parallèle de l'exécution de l'étape 334 et dans une étape 336, les écarts angulaires commandés de dépointage de l'antenne satellite de réception 12 et les mesures de directivité relatives ou de gains relatifs associés sont enregistrés.

Ensuite dans l'étape 338, un ou plusieurs diagrammes angulaires de variation de la directivité de l'antenne satellite de réception 12 et/ou une ou plusieurs coupes angulaires de variation de la directivité de l'antenne satellite de réception 12 sont reconstitués à partir des écarts angulaires commandés de dépointage de l'antenne satellite de réception 12 et les mesures de directivité relatives ou de gains relatifs associés, mono ou multi-fréquentielles.

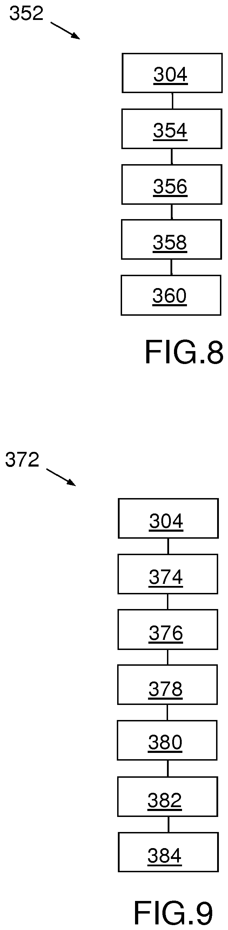

Suivant la Figure 8, et un troisième mode de réalisation, le répéteur est supposé transparent et la caractérisation de la charge utile concerne la caractérisation de la réponse de gain du répéteur 20 de son extrémité d'entrée à son extrémité de sortie suivant une commande de gain prédéterminée des deuxièmes moyens d'amplification 28 pour laquelle le répéteur 20 fonctionne en mode linéaire lorsque la station sol 82 génère un bruit thermique de test dont la densité spectrale de puissance est égale à la densité spectrale de puissance de référence Dref. Un procédé de caractérisation de cette performance 352 comprend la première étape 304 comme étape préalable et un ensemble d'étapes 354, 356, 358 et 360.

Dans l'étape 354, l'antenne satellite de réception 12 est pointée par télécommande sur la station sol de test 82 suivant une direction de pointage de référence.

Puis, dans l'étape 356 les deuxièmes moyens d'amplification 28 sont configurés par télécommande pour fixer le gain du répéteur à la valeur de gain prédéterminée compatible d'un fonctionnement linéaire du répéteur lorsque la station sol 82 émet le bruit thermique de test à la densité spectrale de puissance de référence Dref.

Ensuite, dans l'étape 358 les premier moyens d'amplification 86 de la station sol sont commandés par le banc de test 84 pour générer un bruit thermique de test en entrée de l'antenne sol d'émission 88 couvrant la bande du répéteur et faire varier la densité spectrale de puissance du bruit thermique de test par pas d'une durée prédéterminée dans une plage d'atténuation par rapport à la densité spectrale de référence Dref comprise entre 0 dB et une valeur de recul inférieure ou égal au premier seuil Ds1.

En parallèle, dans l'étape 360, sur l'ensemble balayé des densités spectrales de puissance du bruit thermique généré par la station sol 82, les puissances à l'entrée du répéteur 20 et les puissances correspondantes à la sortie du répéteur sont mesurées corrélativement à partir de mesures faites au niveau de la station sol sur la voie montante et la voie descendante, et l'évolution du gain en fonction de la puissance d'entrée du répéteur est déduite de ces mesures.

Suivant la Figure 9, et un quatrième mode de réalisation, le répéteur est supposé transparent et la caractérisation de la charge utile concerne la caractérisation de la réponse du gain en fréquence sur la bande entière du répéteur suivant une même commande de gain prédéterminée appliquée aux deuxièmes moyens d'amplification 28 pour laquelle le répéteur fonctionne en mode linéaire lorsque la station sol 82 génère un bruit thermique de test dont la densité spectrale de puissance est égale à la densité de puissance de référence Dref.

Un procédé de caractérisation de cette performance 372 comprend la première étape 304 comme étape préalable et un ensemble d'étapes 374, 376, 378, 380, 382 et 384.

Dans l'étape 374, l'antenne satellite de réception 12 est pointée sur la station sol de test 82 suivant une direction de pointage de référence.

Puis, dans l'étape 376 les deuxièmes moyens d'amplification 28 sont configurés par télécommande pour fixer le gain du répéteur à une valeur de gain prédéterminée compatible d'un fonctionnement linéaire du répéteur lorsque la station sol 82 émet le bruit thermique de test à la densité spectrale de bruit de référence.

Ensuite, dans l'étape 378 les premier moyens d'amplification 86 de la station sol 82 sont commandés par le banc de test 84 pour générer un bruit thermique en entrée de l'antenne sol d'émission 88 couvrant la bande de réception du répéteur à la densité spectrale de puissance de référence Dref.

En parallèle de l'étape 378 et corrélativement dans l'étape 380, les densités spectrales, émises et reçues au travers de l'antenne sol de réception 94 par la station sol 82 lorsqu'il existe une zone d'intersection 62 des zones de couverture de l'antenne de réception et de l'antenne d'émission du satellite et que la station sol 82 s'y trouve, sont mesurées sur un ensemble de fréquences, balayées par pas de durée prédéterminée.

Dans l'étape 382, les fréquences balayées et les densités spectrales de puissance reçues correspondantes sont enregistrées.

Ensuite, dans l'étape 384 la variation de gain en fonction de la fréquence dans la bande de réception du répéteur sont déduites de ces mesures.

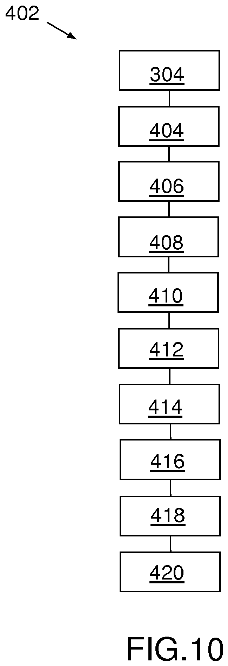

Suivant la Figure 10 et un cinquième mode de réalisation, le répéteur 20 est supposé transparent et la caractérisation de la charge utile concerne la caractérisation du flux saturant ou de la densité de flux saturant (SFD) du répéteur du satellite et/ou de la mesure de Puissance d'Emission Isotrope Rayonnée (PIRE) de la charge utile. Un procédé de caractérisation de cette performance 402 comprend la première étape 304 comme étape préalable et un ensemble d'étapes 404, 406, 408, 410, 412, 414, 416, 418 et 420.

Dans la première série des étapes 404, 406, 408, 410, 412, le flux saturant ou la densité de flux saturant (SFD) du répéteur du satellite est caractérisé.

Dans l'étape 404, l'antenne de réception du satellite est pointée sur la station sol de test suivant une direction de pointage de référence.

Puis, dans l'étape 406, les deuxièmes moyens d'amplification 28 sont configurés par télécommande pour faire fonctionner le répéteur dans un régime d'amplification linéaire lorsque la densité spectrale de puissance du bruit thermique de test injecté en entrée de l'antenne sol d'émission 88 est inférieure ou égale à la densité spectrale de puissance de référence Dref.

Ensuite, dans l'étape 408 les premier moyens d'amplification 86 de la station sol de test 82 sont commandés par le banc de test 84 pour générer un bruit thermique de test en entrée de l'antenne sol d'émission couvrant la bande de réception du répéteur et le faire varier la densité spectrale de puissance de bruit thermique de test par pas de durée prédéterminée dans une plage d'atténuation par rapport à la densité spectrale de référence Dref comprise entre 0 dB et une valeur de recul, inférieure ou égale au premier seuil Ds1.

En parallèle de l'étape 408 et dans l'étape 410, sur l'ensemble balayé des densités spectrales de puissance du bruit thermique généré par la station sol 82 sont mesurées corrélativement :
.- soit les puissances d'entrée et de sortie correspondantes du répéteur au travers des télémesures satellite, ou
.- soit les puissances d'entrée du répéteur au travers de mesure au niveau de la station sol ou au travers de la télémesure satellite, et les puissances correspondantes reçues par la station sol au travers de l'antenne sol de réception 94 lorsqu'il existe une zone d'intersection 62 des zones de couverture de l'antenne de réception et de l'antenne d'émission du satellite et que la station sol se trouve dans ladite zone d'intersection.

Ensuite, dans l'étape 412 la variation de la Puissance d'Emission Isotrope Rayonnée (PIRE) de la charge utile en fonction de la puissance d'entrée reçue par le répéteur sur une première plage de puissance d'entrée et du gain fixé du répéteur est déduite de ces mesures.

Dans la deuxième série des étapes 414, 416, 418, 420, la mesure de la Puissance d'Emission Isotrope Rayonnée (PIRE) est mise en oeuvre.

Dans l'étape 414 les premiers moyens d'amplification 86 sont commandés par le banc de test 84 pour fixer la densité spectrale du bruit thermique, injecté en entrée de l'antenne sol d'émission 88 et couvrant la bande totale du répéteur, à la densité spectrale de puissance de référence Dref.

Ensuite, dans l'étape 416 les deuxièmes moyens d'amplification 28 du répéteur 20 sont configurés en faisant varier par pas de durée prédéterminée le gain linéaire du répéteur 10 dans une plage de gains du répéteur comprise entre la première valeur de gain inférieur Gmin et la deuxième valeur de gain supérieur Gmax pour faire fonctionner le répéteur 20 dans un mode non linéaire dans lequel un amplificateur de haute puissance formant une extrémité des deuxièmes moyens d'amplification 28 est comprimé.

En parallèle de l'étape 416 et corrélativement dans l'étape 418, sur l'ensemble balayé des commande de gains linéaires du répéteur sont mesurées :
.- soit les puissances d'entrée et de sortie correspondantes du répéteur au travers des télémesures satellite, ou
.- soit les puissances d'entrée du répéteur au travers de mesure au niveau de la station sol ou au travers de la télémesure satellite et les puissances correspondantes reçues par la station sol au travers de l'antenne sol de réception lorsqu'il existe une zone d'intersection des zones de couverture de l'antenne de réception et de l'antenne d'émission du satellite et que la station sol se trouve dans ladite zone d'intersection.

Ensuite dans l'étape 420, les variations de la Puissance d'Emission Isotrope Rayonnée (PIRE) de la charge utile en fonction de la puissance d'entrée reçue par le répéteur sur la première plage de puissance d'entrée et/ou la densité de flux saturant (SFD) sont déduites des mesures.

L'ensemble des étapes 406, 408, 410, 412 caractérisent le fonctionnement linéaire du répéteur tandis que l'ensemble des étapes 414, 416, 418, 420 caractérisent le fonctionnement non linéaire du répéteur.

En variante, une seule des deux séries d'étapes parmi la première série et la deuxième série est effectuée.

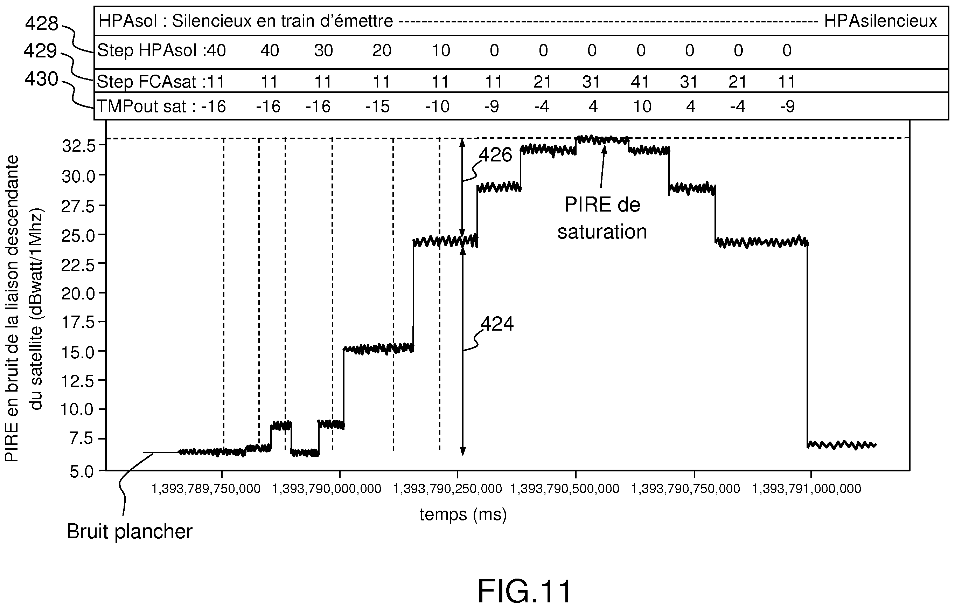

Suivant la Figure 11, des résultats de mesures obtenus par la mise en oeuvre du procédé 402 sur une charge utile transparente en bande Ka, sont illustrés qui montrent une première plage d'observation 424 et une deuxième plage d'observation 426 de l'évolution temporelle de la PIRE de la charge utile lorsqu'un bruit thermique de test est émis par la station sol de test IOT et que l'on fait varier les gains respectifs de premiers moyens d'amplification 86 et des deuxièmes moyens d'amplification 28.

La première plage d'observation 424 correspond à un fonctionnement du répéteur qui peut être considéré comme linéaire et à une plage de dynamique de réglage des premiers moyens d'amplification 86 égale ici à 18 dB. Compte tenu du plancher de bruit ramené en sortie du répéteur illustré sur la Figure 11, il peut en être déduit que Dref est égal à 18 dB, valeur qui est supérieure au premier seuil Ds1 égal à 10 dB. Comme le montre un premier bandeau 428, indicateur du réglage du gain des premiers moyens d'amplification, exprimé par une atténuation en dB de la puissance maximale émise par l'amplificateur de haute puissance de la station sol 82, et un deuxième bandeau 429, indicateur du réglage du gain en dB des deuxièmes moyens d'amplification, les réglages effectués correspondent aux étapes 406, 408, 410, 412 du procédé 402.

La deuxième plage d'observation 426 correspond à un fonctionnement non linéaire du répéteur pour lequel on fixe le réglage des premiers moyens d'amplification 86 à l'émission maximale de puissance de bruit de test par l'amplificateur haute puissance de la station sol 82, et on augmente progressivement par palier de durée prédéterminée le gain des deuxièmes moyens d'amplification jusqu'à atteindre une PIRE de saturation.

Un troisième bandeau 430 donne une indication de la valeur de recul, exprimée en dBm, de la puissance de sortie de l'amplificateur de haute puissance du répéteur, rapportée par une télémesure de la puissance de sortie du répéteur.

Comme le montre les indications des premier, deuxième et troisième bandeaux 428, 429, 430, les réglages effectués correspondent aux étapes 414, 416, 418, 420 du procédé 402.

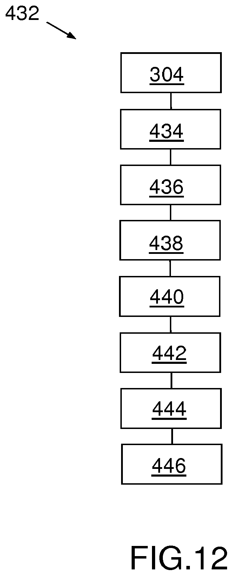

Suivant la Figure 12, et un sixième mode de réalisation, le répéteur est supposé transparent ou régénératif, et lorsque le répéteur est transparent il est supposé également que l'intersection entre la couverture montante et la couverture descendante est vide.

La caractérisation de la charge utile concerne la mesure du G/T de la charge utile, G désignant le gain de l'antenne dans une direction prédéterminée et T désignant la température de bruit ramenée en entrée du répéteur.

Un procédé de mesure du G/T de la charge utile 432 comprend la première étape 304 comme étape préalable et un ensemble d'étapes 434, 436, 438, 440, 442, 444 et 446.

Dans l'étape 434, l'antenne de réception 12 du satellite est pointée par télécommande sur la station sol 82 suivant une direction de pointage de référence.

Puis, dans l'étape 436 on éteint ou on laisse éteinte l'émission de signaux radioélectriques par la station sol 82 de test.

Ensuite, dans l'étape 438 les deuxièmes moyens d'amplification 28 du répéteur 20 sont configurés par télécommande pour fixer le gain du répéteur à une valeur de gain compatible d'un fonctionnement linéaire du répéteur et d'une mesure de bruit au travers d'une télémesure du satellite.

Puis dans l'étape 440, un premier bruit thermique N1, propre au répéteur et présent en entrée du répéteur est mesuré au travers de la télémesure d'entrée du répéteur 20.

Ensuite, dans l'étape 442, la station sol de test 82 est activée et les premiers moyens d'amplification 86 sont commandés par le banc de test pour générer un bruit thermique de test dont la densité spectrale est égale à la densité spectrale de référence Dref.

Puis, dans l'étape 444, la puissance du bruit thermique N2 reçu en provenance de la station sol 82 et en entrée du répéteur est mesurée dans la bande de réception du répéteur au travers de la télémesure d'entrée du répéteur.

Ensuite dans l'étape 446, le rapport G/T est déduit du rapport de la puissance du bruit reçu N2 sur le bruit thermique propre N1 du répéteur.

En variante, lorsque le répéteur est transparent et qu'il existe une zone d'intersection entre la couverture montante et la couverture descendante, un deuxième procédé de mesure du G/T de la charge utile comprend les mêmes étapes 434, 436, 442, 446 que le premier procédé de mesure 432 de G/T.

Le deuxième procédé de mesure du G/T diffère du premier procédé de mesure 432 du G/T en ce que les deux étapes 438, 440 sont remplacées par les étapes consistant à configurer les deuxième moyens d'amplification 28 du répéteur à une valeur de gain compatible d'un fonctionnement linéaire du répéteur; puis mesurer le bruit thermique N1 propre sur la voie descendante par la station sol 82, et en ce que l'étape 444 est remplacée par l'étape consistant à mesurer par la station sol 82 un bruit thermique reçu N2 redescendant.

## Revendications

1. Procédé de caractérisation des performances d'une charge utile (4) d'un satellite (6) en orbite à l'aide d'une station sol de test (82),
la station sol de test (82) comportant des premiers moyens d'amplification radiofréquence (86), et une antenne sol d'émission radiofréquence (88) avec un premier port d'entrée (90) de l'antenne connecté en sortie de des premiers moyens d'amplification radiofréquence (86),
la charge utile (4) du satellite (6) comportant une première antenne satellite de réception (12) de voie montante (8), une deuxième antenne satellite d'émission (14) de voie descendante (16), et un répéteur (20) interconnecté entre la première antenne satellite de réception (12) et la deuxième antenne satellite d'émission (14),
le répéteur (20) comportant un deuxième port d'entrée radiofréquence (24) connecté à un port de sortie (26) de l'antenne satellite de réception (12), et des deuxièmes moyens d'amplification (28), configurés pour amplifier sur une portion d'entrée du répéteur de voie montante ou la totalité du répéteur, des signaux dans une bande de fréquence de réception du répéteur (20), suivant un mode d'amplification linéaire et avec un gain fixe télécommandable compris dans une plage de gain variant entre un premier gain inférieur Gmin et un deuxième gain supérieur Gmax,
le procédé étant **caractérisé en ce qu'**il comprend une étape de fourniture (304) consistant à :
.- fournir (304) les premiers moyens d'amplification (86) configurables pour générer en entrée (90) de l'antenne sol d'émission (88) un bruit thermique de test ayant une largeur de bande supérieure ou égale à la bande de réception du répéteur et dont la densité spectrale de puissance est réglable jusqu'à une densité spectrale de puissance de référence Dref de bruit thermique de test telle que le rapport de la densité spectrale du bruit thermique de test, reçu en provenance de la station sol de test (82) lorsque la densité spectrale de bruit thermique qu'elle émet est égale à la densité spectrale de référence Dref, et reçu à l'entrée (24) du répéteur (20), sur la densité spectrale de bruit thermique plancher généré par le satellite (6) seul en interne et le bruit thermique naturel de la Terre à l'entrée (24) du répéteur (20) est supérieur ou égal à un premier seuil Ds1 égal à 10 dB.

2. Procédé de caractérisation des performances d'une charge utile selon la revendication 1,
dans lequel un banc de test (84), déporté de ou intégré dans la station sol de test (82), est configuré pour envoyer et recevoir respectivement des télécommandes de configuration au et des télémesures depuis le satellite (4) au travers d'une infrastructure de télécommande et de télémesure (138), terminée par une station de télécommande et télémesure (140) visible depuis le satellite (6), et pour envoyer à et recevoir de la station sol de test (82) des commandes de premiers moyens d'amplification (86) et du bruit thermique de test retransmis par le satellite (4) avec ou sans traitement,
le procédé comprenant en outre les étapes consistant à :
.- configurer (306) l'attitude du satellite et/ou de l'antenne satellite de réception (12) pour que l'antenne de réception (12) pointe vers la station sol (82) suivant une position angulaire de pointage de référence ;
.- configurer (308) les deuxièmes moyens d'amplification (28) de la charge utile à un gain fixe prédéterminé qui correspond à un mode de fonctionnement linéaire sur au moins la portion d'entrée du répéteur correspondant à la voie montante (8) ou la totalité du répéteur (20) lorsque le bruit thermique de test reçu en provenance de la station sol (82) et à l'entrée du répéteur correspond à une densité spectrale de bruit thermique de test émis par la station sol (82) égale à la densité spectrale de référence Dref ;
.- configurer (310) les premiers moyens d'amplification (86) de la station sol de test (82) pour générer en entrée de l'antenne sol d'émission (88) un bruit thermique de test ayant une bande couvrant la bande de réception du répéteur, et dont la densité spectrale de puissance est égale à la densité spectrale de référence Dref, et faire transmettre le bruit thermique de test par la station sol de test (82) dans cette configuration des premiers moyens d'amplification (86) ; puis
.- acquérir (312) pendant une durée prédéterminée au moins une mesure représentative de la puissance reçue en entrée du répéteur au travers d'au moins une mesure de puissance reçue correspondante soit par la station sol de test au travers de la voie descendante lorsqu'il existe une zone d'intersection (62) des zones de couverture de l'antenne de réception et de l'antenne d'émission du satellite et que la station sol se trouve à l'intérieur de ladite zone d'intersection ; ou soit par des télémesures correspondantes de la puissance captée en un emplacement du répéteur où l'amplification est linéaire et où accessoirement le gain correspondant est connu.

3. Procédé de caractérisation des performances d'une charge utile selon l'une quelconque des revendications 1 à 2, dans lequel la largeur de la bande du bruit thermique de test émis vers le satellite est comprise entre 30 MHz et 3 GHz ou comprise entre 3% et 10% d'une fréquence centrale de la bande de fréquence d'émission de la station sol de test (82) ou de réception de la charge utile (4).

4. Procédé de caractérisation des performances d'une charge utile selon l'une quelconque des revendications 1 à 3, dans lequel la bande de fréquence d'émission de la station sol de test (82), respectivement de la bande de réception de la charge utile (4), est comprise dans les bandes L, S, C, X, Q, V, Ku et Ka.

5. Procédé de caractérisation des performances d'une charge utile selon l'une quelconque des revendications 1 à 4, dans lequel le premier seuil Ds1 de rapport de densité de bruit dépend de la bande de fréquence de réception de la charge utile (4), de l'orbite du satellite (6), de la taille de l'antenne d'émission (88) de la station sol de test (82) et du paramètre G/T de la charge utile (4) du satellite testé (6).

6. Procédé de caractérisation des performances d'une charge utile selon l'une quelconque des revendications 1 à 5, dans lequel la caractérisation des performances de la charge utile du satellite en orbite de service est comprise dans l'ensemble formé par :
.- la caractérisation mono ou multi-fréquentielle d'un ou plusieurs diagrammes angulaires et/ou d'une ou plusieurs coupes angulaires de rayonnement de l'antenne de réception (12) du satellite lorsque le répéteur de charge utile est un répéteur transparent ou un répéteur régénératif ;
.- la réponse de gain linéaire du port d'entrée au port de sortie du répéteur lorsque le répéteur est un répéteur transparent fonctionnant dans un mode linéaire, et lorsqu'il existe une zone d'intersection des zones de couverture de l'antenne de réception et de l'antenne d'émission du satellite et que la station sol s'y trouve;
.- la variation du gain linéaire du répéteur en fonction de la fréquence dans la bande du répéteur pour un gain fixé du répéteur ;
.- la mesure du flux saturant ou de la densité de flux saturant (SFD) du transpondeur du satellite et la mesure de Puissance d'Emission Isotrope Rayonnée (PIRE) de la charge utile lorsque le répéteur est transparent ;
.- la mesure du G/T de la charge utile avec ou sans visibilité de la voie descendante depuis la station sol ;
.- la caractérisation de la tenue en puissance RF de la charge utile et/ou de la consommation et/ou des performances de la plateforme lorsque la charge utile est chargée par le bruit thermique reçu dans une configuration proche des conditions opérationnelles, par exemple suivant un trafic maximum ou un trafic variable dans le temps.

7. Procédé de caractérisation des performances d'une charge utile selon l'une quelconque des revendications 1 à 6, dans lequel
la caractérisation de la charge utile est la caractérisation d'un diagramme angulaire ou de coupes angulaires de variation de la directivité de l'antenne satellite de réception,
et le procédé (322) comprend les étapes consistant à :
.- configurer (324) l'attitude du satellite et/ou de l'antenne satellite de réception (12) pour que l'antenne satellite de réception (12) pointe vers la station sol de test (82) suivant une position angulaire de pointage de référence ;
.- configurer (326) les deuxièmes moyens d'amplification de la charge utile à un premier gain fixe prédéterminé qui correspond à un mode de fonctionnement linéaire sur la portion d'entrée du répéteur correspondant à la voie montante (8) ou la totalité du répéteur (20) lorsque la bruit thermique de test reçu en provenance de la station sol (82) et à l'entrée du répéteur correspond à une densité spectrale de bruit thermique de test émis par la station sol (82) égale à la densité spectrale de référence Dref ;
.- configurer (328) les premiers moyens d'amplification (86) de la station sol (82) pour générer en entrée de l'antenne sol d'émission un bruit thermique de test ayant une largeur de bande supérieure ou égale à celle de la bande de réception du répéteur, et dont la densité spectrale de puissance est égale à la densité spectrale de référence Dref ; puis
.- générer (330) pendant une durée prédéterminée par la station sol le bruit thermique de test correspondant à la configuration des premiers moyens d'amplification (86) à la densité spectrale de référence Dref lorsque l'antenne satellite de réception (12) pointe sur la station sol (82) suivant la direction de pointage de référence ; puis
.- mesurer (332) un niveau de référence correspondant à la direction de pointage de référence
à partir du signal de bruit thermique de test retransmis par la charge utile (4) suivant la voie descendante (16) et reçu par la station sol (82) au travers d'une antenne sol de réception (94) lorsqu'il existe une zone d'intersection (62) des zones de couverture de l'antenne de réception et de l'antenne d'émission du satellite et que la station sol s'y trouve, ou
à partir d'une télémesure du satellite fournissant le niveau de puissance reçu à un emplacement du répéteur où l'amplification est linéaire et où accessoirement le gain jusqu'à cet emplacement connu ; puis
.- par rapport à la direction de pointage de référence, dépointer (334) l'antenne de réception sur un ensemble de positions angulaires de dépointage de l'antenne de réception par rapport à la direction de pointage de référence ; et pour chaque position angulaire de dépointage,
* générer au sol pendant une durée prédéterminée le bruit thermique de test couvrant la bande de réception du répéteur et correspondant à la configuration des premiers moyens d'amplification à la densité de référence Dref; et
* mesurer pendant une durée prédéterminée sur une ou plusieurs fréquences de la bande du répéteur, la directivité relative ou le gain relatif de l'antenne satellite de réception par rapport au niveau de référence, correspondant à la position angulaire de dépointage de l'antenne satellite de réception,
à partir du signal de bruit thermique de test retransmis par la charge utile suivant la voie descendante et reçu par la station sol au travers d'une antenne sol de réception lorsqu'il existe une zone d'intersection des zones de couverture de l'antenne de réception et de l'antenne d'émission du satellite et que la station sol s'y trouve, ou
à partir d'une télémesure du satellite fournissant le niveau de puissance reçu à un emplacement du répéteur où l'amplification linéaire et le gain jusqu'à cet emplacement connu ;
.- enregistrer (336) les écarts angulaires commandés de dépointage de l'antenne satellite de réception (12) et les mesures de directivité relatives ou de gains relatifs associés ; puis
.- à partir des écarts angulaires commandés de dépointage de l'antenne satellite de réception et les mesures de directivité relatives ou de gains relatifs associés, mono ou multi-fréquentielles, reconstituer (338) un ou plusieurs diagrammes angulaires de variation de la directivité de l'antenne satellite de réception et/ou une ou plusieurs coupes angulaires de variation de la directivité de l'antenne satellite de réception.

8. Procédé de caractérisation des performances d'une charge utile selon l'une quelconque des revendications 1 à 6, dans lequel le répéteur est un répéteur transparent ; et
la caractérisation de la charge utile est la caractérisation de la réponse de gain du répéteur de son extrémité d'entrée à son extrémité de sortie sur la bande de réception du répéteur suivant une commande de gain prédéterminée des deuxièmes moyens d'amplification (28) pour laquelle le répéteur (20) fonctionne en mode linéaire lorsque la station sol de test (82) génère un bruit thermique de test dont la densité spectrale de puissance est égale à la densité spectrale de puissance de référence Dref ; et
le procédé (352) comprend les étapes consistant à :
.- pointer (354) l'antenne satellite de réception (12) sur la station sol de test (82) suivant une direction de pointage de référence ; puis
.- configurer (356) les deuxièmes moyens d'amplification (28) pour fixer le gain du répéteur (20) à la valeur de gain prédéterminée compatible d'un fonctionnement linéaire du répéteur (20) lorsque la station sol (82) émet le bruit thermique de test à la densité spectrale de puissance de référence Dref; et
.- configurer (358) les premiers moyens d'amplification (86) de la station sol (82) pour générer un bruit thermique en entrée de l'antenne d'émission (88) couvrant la bande du répéteur et faire varier (358) la densité spectrale de puissance du bruit thermique de test par pas d'une durée prédéterminée dans une plage d'atténuation par rapport à la densité spectrale de référence Dref comprise entre 0 dB et une valeur de recul inférieure ou égal au premier seuil Ds1 ; et
.- sur l'ensemble balayé des densités de puissance du bruit thermique généré par la station, mesurer corrélativement (360) les puissances à l'entrée du répéteur et les puissances correspondantes à la sortie du répéteur et en déduire l'évolution du gain en fonction de la puissance d'entrée du répéteur (20).

9. Procédé de caractérisation des performances d'une charge utile selon l'une quelconque des revendications 1 à 6, dans lequel le répéteur (20) est un répéteur transparent ; et la caractérisation de la charge utile est la caractérisation de la réponse du gain en fréquence sur la bande entière du répéteur (20) suivant une même commande de gain prédéterminée appliquée aux deuxièmes moyens d'amplification (28) pour laquelle le répéteur fonctionne en mode linéaire lorsque la station sol génère un bruit thermique de test dont la densité spectrale de puissance est égale à la densité spectrale de puissance de référence Dref ; et
le procédé (372) comprend les étapes consistant à :
.- pointer (374) l'antenne satellite de réception (12) sur la station sol de test (82) suivant une direction de pointage de référence ; puis
.- configurer (376) les deuxième moyens d'amplification (28) pour fixer le gain du répéteur (20) à une valeur de gain prédéterminée compatible d'un fonctionnement linéaire du répéteur lorsque la station sol de test (82) émet le bruit thermique de test à la densité spectrale de puissance de référence ; et
.- configurer (378) les premiers moyens d'amplification (86) de la station sol de test (82) pour générer un bruit thermique en entrée de l'antenne sol d'émission (88) couvrant la bande de réception du répéteur (20) à la densité spectrale de puissance de référence Dref ;
. sur un ensemble de fréquences balayées par pas de durée prédéterminée, mesurer corrélativement (380),
les densités spectrales émises et reçues en fonction de la fréquence par la station sol (82) au travers de l'antenne sol de réception lorsqu'il existe une zone d'intersection (62) des zones de couverture de l'antenne de réception et de l'antenne d'émission du satellite et que la station sol s'y trouve ; puis
.- en déduire (384) la variation de gain en fonction de la fréquence dans la bande de réception du répéteur (20).

10. Procédé de caractérisation des performances d'une charge utile selon l'une quelconque des revendications 1 à 6, dans lequel le répéteur est un répéteur transparent (20); et la caractérisation de la charge utile est la caractérisation du flux saturant ou de la densité de flux saturant (SFD) du répéteur du satellite et/ou de la mesure de Puissance d'Emission Isotrope Rayonnée (PIRE) de la charge utile ; et
le procédé (402) comprend les étapes (404, 406, 408, 410, 412) consistant à :
.- pointer (404) l'antenne de réception (12) du satellite sur la station sol (82) suivant une direction de pointage de référence ; puis
.- configurer (406) les deuxièmes moyens d'amplification (28) pour faire fonctionner le répéteur dans un régime d'amplification linéaire lorsque la densité spectrale de puissance du bruit thermique de test injecté en entrée de l'antenne sol d'émission (88) est inférieure ou égale à la densité spectrale de puissance de référence Dref ;
.- configurer (408) les premiers moyens d'amplification (86) de la station sol (82) pour générer un bruit thermique de test en entrée de l'antenne sol d'émission (88) couvrant la bande de réception du répéteur (20) et faire varier la densité spectrale de puissance de bruit thermique de test par pas de durée prédéterminée dans une plage d'atténuation par rapport à la densité spectrale de référence Dref comprise entre 0 dB et une valeur de recul inférieure ou égal au premier seuil Ds1 ; et
.- sur l'ensemble balayé des densités de puissance du bruit thermique généré par la station sol (82) mesurer corrélativement (410) soit
les puissances d'entrée et de sortie correspondantes du répéteur (20) au travers des télémesures satellite, ou soit les puissances d'entrée du répéteur au travers de mesure au niveau de la station sol ou au travers de la télémesure satellite et les puissances correspondantes reçues par la station sol au travers de l'antenne sol de réception (94) lorsqu'il existe une zone d'intersection (62) des zones de couverture de l'antenne de réception et de l'antenne d'émission du satellite et que la station sol (82) se trouve dans ladite zone d'intersection (62), et
.- en déduire (412) l'évolution de la Puissance d'Emission Isotrope Rayonnée (PIRE) de la charge utile en fonction de la puissance d'entrée reçue par le répéteur sur une première plage d'observation ;
et/ou le procédé (402) comprend les étapes (414, 416, 418, 420) consistant à :
.- configurer (414) les premier moyens d'amplification (86) pour fixer la densité spectrale du bruit thermique de test injecté en entrée de l'antenne sol d'émission (88) et couvrant la bande totale du répéteur à la densité spectrale de puissance de référence Dref ; puis
.- configurer (416) les deuxièmes moyens d'amplification (28) du répéteur (20) en faisant varier par pas de durée prédéterminée le gain linéaire du répéteur (20) dans une plage de gains du répéteur comprise entre la première valeur de gain inférieure Gmin et la deuxième valeur de gain supérieure Gmax pour faire fonctionner le répéteur (20) dans un mode non linéaire dans lequel un amplificateur de haute puissance formant une extrémité des deuxièmes moyens d'amplification (28) est comprimé; et
.- sur l'ensemble balayé des commande de gains linéaires du répéteur mesurer corrélativement (418) soit les puissances d'entrée et de sortie correspondantes du répéteur (20) au travers des télémesures satellite, ou soit les puissances d'entrée du répéteur au travers de mesure au niveau de la station sol ou au travers de la télémesure satellite et les puissances correspondantes reçues par la station sol (82) au travers de l'antenne sol de réception (94) lorsqu'il existe une zone d'intersection (62) des zones de couverture de l'antenne de réception et de l'antenne d'émission du satellite et que la station sol (82) se trouve dans ladite zone d'intersection (62), et
.- en déduire (420) l'évolution de la Puissance d'Emission Isotrope Rayonnée (PIRE) de la charge utile en fonction du gain du répéteur et de la puissance d'entrée reçue en entrée du répéteur correspondant à une densité spectrale du bruit thermique de test émis au sol égale à la densité spectrale de référence Dref et/ou la densité de flux saturant (SFD).

11. Procédé d'une caractérisation des performances d'une charge utile selon l'une quelconque des revendications 1 à 6, dans lequel la caractérisation de la charge utile est une mesure (432) du G/T dans lequel G désigne le gain de l'antenne et T désigne la température de bruit ramenée en entrée du répéteur ; et lorsque le répéteur est transparent et qu'il existe pas d'intersection entre la couverture montante et la couverture descendante ou le répéteur est régénératif,
le procédé (432) comprend les étapes consistant à :
.- pointer (434) l'antenne de réception (12) du satellite sur la station sol (82) suivant une direction de pointage de référence
.- éteindre ou laisser éteinte (436) l'émission de signaux radioélectriques par la station sol (82) ; puis
. configurer (438) les deuxième moyens d'amplification (28) du répéteur à une valeur de gain compatible d'un fonctionnement linéaire du répéteur et d'une mesure de bruit au travers d'une télémesure satellite ; puis
.- mesurer (440) le bruit thermique N1 propre au répéteur présent en entrée du répéteur au travers de la télémesure d'entrée du répéteur ; puis puis
.- activer (442) la station sol (82) et configurer les premiers moyens d'amplification (86) pour générer un bruit thermique de test dont la densité spectrale mesurée au sol est supérieure ou égale à la densité de référence Dref; puis
.- mesurer (444) un bruit thermique reçu N2 en provenance de la station sol (82) et en entrée du répéteur dans la bande de réception du répéteur au travers de la télémesure d'entrée du répéteur ;
.- déterminer (446) le rapport G/T à partir du rapport du bruit thermique reçu N2 sur le bruit thermique propre N1 du répéteur.

12. Procédé d'une caractérisation des performances d'une charge utile selon l'une quelconque des revendications 1 à 6, dans lequel la caractérisation de la charge utile est une mesure du G/T dans lequel G désigne le gain de l'antenne et T désigne la température de bruit ramenée en entrée du répéteur ; et lorsque le répéteur est transparent et qu'il existe une intersection entre la couverture montante et la couverture descendante,
le procédé de mesure du G/T comprend les étapes consistant à :
.- pointer (434) l'antenne de réception (12) du satellite sur la station sol (82) suivant une direction de pointage de référence
.- éteindre ou laisser éteinte (436) l'émission de signaux radioélectriques par la station sol (82) ; puis
.- configurer les deuxième moyens d'amplification (28) du répéteur à une valeur de gain compatible d'un fonctionnement linéaire du répéteur; puis
.- mesurer le bruit thermique N1 propre sur la voie descendante; puis
.- activer (442) la station sol (82) et configurer les premiers moyens d'amplification (86) pour générer un bruit thermique de test dont la densité spectrale mesurée au sol est supérieure ou égale à la densité de référence Dref; puis
.- mesurer un bruit thermique reçu N2 redescendant ; puis
.- déterminer (446) le rapport G/T à partir du rapport du bruit thermique mesuré N2 sur le bruit thermique propre N1 du répéteur.

13. Système pour la caractérisation des performances d'une charge utile (4) d'un satellite (6) en orbite sur une bande de fréquences et sur une voie montante (8),
la charge utile (4) du satellite (6) comportant une première antenne satellite de réception (12) de voie montante (8), une deuxième antenne satellite d'émission (14) de voie descendante (16), et un répéteur large bande (20), interconnecté entre la première antenne satellite de réception (12) et la deuxième antenne satellite d'émission (14);
le répéteur (20) comportant un port d'entrée radiofréquence (24), connecté à un port de sortie (26) de l'antenne satellite de réception (12), et des deuxièmes moyens d'amplification (28), configurés pour amplifier sur une portion d'entrée du répéteur correspondant à la voie montante (8) ou sur la totalité du répéteur (20), des signaux compris dans la bande de fréquence, suivant un mode d'amplification linéaire et avec un gain fixe télécommandable compris dans un plage de gain variant depuis un premier gain inférieur Gmin et un deuxième gain supérieur Gmax, et
le système comprenant :
.- une station sol de test (82) comportant des premiers moyens d'amplification radiofréquence (86), et une antenne sol d'émission radiofréquence (88) avec un port d'entrée (90) connecté à une sortie (92) de premiers moyens d'amplification (86);
.- une infrastructure de télécommande et de télémesure (136) de la charge utile et de la plateforme satellite, terminée par une station de télécommande et télémesure (140) visible depuis le satellite (6); et
.- un banc de test (84) connecté à la station sol de test et à l'infrastructure de télécommande et de télémesure, configuré pour mettre en oeuvre le procédé de caractérisation de la charge utile défini selon l'une quelconque des revendications 1 à 13 en coordonnant l'envoi de commandes et la réception de signaux à mesurer et/ou de télémesures respectivement envoyés et reçus de la station sol de test et de la station de télécommande et télémesure ;
le système étant **caractérisé en ce que** :
les premiers moyens d'amplification (86) de la station sol (82) sont configurables pour générer en entrée (90) de l'antenne sol d'émission (88) un bruit thermique de test ayant une largeur de bande supérieure ou égale à la bande de réception du répéteur, et dont la densité spectrale de puissance est réglable jusqu'à une densité spectrale de puissance de référence Dref telle que le rapport de la densité du bruit thermique de test, reçue en provenance de la station sol de test (82) lorsqu'elle émet est égale à la densité spectrale de référence Dref, et reçu à l'entrée (24) du répéteur (20), sur la densité spectrale de bruit thermique plancher généré par le satellite (6) seul en interne et par le bruit thermique naturel de la Terre à l'entrée (24) du répéteur, est supérieur ou égal à un premier seuil Ds1 égal à 10 dB.

14. Système pour la caractérisation des performances d'une charge utile selon la revendication 13, dans lequel le banc de test (84) comprend
.- des moyens d'acquisition (152) pendant une durée prédéterminée du bruit thermique émis par l'antenne satellite d'émission sur la voie descendante reçu par la station sol de test lorsqu'il existe une zone d'intersection (62) des zones de couverture de l'antenne de réception et de l'antenne d'émission du satellite et que la station sol se trouve à l'intérieur de ladite zone d'intersection, et/ou de télémesures du bruit thermique de test reçu en divers emplacements du répéteur, et de télémesures de la plateforme représentatives de la tenue en puissance RF de la charge utile et/ou de la consommation électrique et/ou des performances thermiques de la plateforme lorsque la charge utile est chargée par un bruit thermique de test dans une configuration proche des conditions opérationnelles, par exemple celle d'un trafic maximum ou un trafic variable dans le temps;
.- des moyens de télécommande (154) de la charge utile et/ou de la plateforme du satellite en orbite de service, pendant ladite durée prédéterminée, pour imprimer un écart angulaire de pointage de l'antenne satellite de réception par rapport à une direction de pointage de référence de variation prédéterminée et/ou pour varier un gain linéaire du répéteur lorsqu'il est dans un mode d'amplification linéaire ou commander un mode d'amplification non linéaire du répéteur en activant une boucle de régulation automatique de gain à l'entrée d'un amplificateur de haute puissance de sortie ;
.- des moyens d'enregistrements (156) des variations commandées par les moyens de telécommande (154) du banc de test (84);
.- des moyens de corrélation (158) pour corréler la mesure du signal par l'antenne satellite d'émission sur la liaison descendante du satellite lorsque lorsqu'il existe une zone d'intersection (62) des zones de couverture de l'antenne de réception et de l'antenne d'émission du satellite et que la station sol s'y trouve, et/ou de télémesures du signal de test reçu en divers emplacement du répéteur ; et/ou d'autres paramètres de satellite en relation avec la charge utile représentatifs de la tenue en puissance RF de la charge utile, et des performances en termes de consommation et régulation thermique de la plateforme, et pour en déduire les variations de paramètres mesurés caractérisant la charge utile ou la plateforme en fonction des variations commandés au satellite.

## Patentansprüche

1. Verfahren zur Kennzeichnung des Leistungsvermögens einer Nutzlast (4) eines Satelliten (6) in einer Umlaufbahn mit Hilfe einer Bodenprüfstation (82),
wobei die Bodenprüfstation (82) erste Hochfrequenzverstärkungsmittel (86) und eine Bodenantenne zum Senden von Hochfrequenz (88) mit einem ersten Antenneneingangsanschluss (90) aufweist, der am Ausgang mit den ersten Hochfrequenzverstärkungsmitteln (86) verbunden ist,
wobei die Nutzlast (4) des Satelliten (6) eine erste Satellitenantenne für den Empfang (12) eines Uplink-Kanals (8), eine zweite Satellitenantenne zum Senden (14) eines Downlink-Kanals (16) und einen Verstärker (20) aufweist, der zwischen die erste Satellitenantenne für den Empfang (12) und die zweite Satellitenantenne für das Senden (14) geschaltet ist,
wobei der Verstärker (20) einen zweiten Hochfrequenzeingangsanschluss (24), der mit einem Ausgangsanschluss (26) der Satellitenantenne für den Empfang (12) verbunden ist, und zweite Verstärkungsmittel (28) aufweist, die konfiguriert sind, um Signale in einem Empfangsfrequenzband des Verstärkers (20) auf einem Eingangsabschnitt des Verstärkers für den Uplink-Kanal oder dem gesamten Verstärker gemäß einem linearen Verstärkungsmodus und mit einer fernsteuerbaren festen Verstärkung inbegriffen in einem Verstärkungsbereich zu verstärken, der sich zwischen einer ersten kleineren Verstärkung Gmin und einer zweiten größeren Verstärkung Gmax ändert,
wobei das Verfahren **dadurch gekennzeichnet ist, dass** es einen Schritt der Bereitstellung (304) umfasst, bestehend aus:
- Zurverfügungstellen (304) der ersten konfigurierbaren Verstärkungsmittel (86), um im Eingang (90) der Bodenantenne für das Senden (88) ein thermisches Prüfrauschen mit einer Bandbreite größer oder gleich dem Empfangsband des Verstärkers zu erzeugen, und dessen spektrale Leistungsdichte bis zu einer spektralen Referenzleistungsdichte Dref des thermisches Prüfrauschens derart einstellbar ist, dass das Verhältnis der Spektraldichte des thermischen Prüfrauschens, das von der Bodenprüfstation (82) empfangen wird, wenn die Spektraldichte des thermischen Rauschens, die sie emittiert, gleich der spektralen Referenzdichte Dref ist und am Eingang (24) des Verstärkers (20) empfangen wird, über die durch den Satelliten (6) nur im Inneren erzeugte Spektraldichte des thermischen Grundrauschens und des natürlichen thermischen Rauschens der Erde im Eingang (24) des Verstärkers (20) größer oder gleich einem ersten Schwellenwert Ds1 gleich 10 dB ist.

2. Verfahren zur Kennzeichnung des Leistungsvermögens einer Nutzlast nach Anspruch 1,
wobei ein von der Bodenprüfstation (82) abgesetzter oder in sie integrierter Prüfstand (84) konfiguriert ist, um jeweils Konfigurationsfernsteuerungen zu dem und Fernmessungen mittels einer Infrastruktur für Fernsteuerung und Fernmessung (138) von dem Satelliten (4) zu senden bzw. zu empfangen, die durch eine von dem Satelliten (6) aus sichtbare Station für Fernsteuerung und Fernmessung (140) abgeschlossen wird, und um Befehle für erste Verstärkungsmittel (86) und durch den Satelliten (4) zurückübertragenes thermisches Prüfrauschen mit oder ohne Verarbeitung an die Bodenprüfstation (82) zu senden bzw. von ihr zu empfangen,
wobei das Verfahren ferner die Schritte umfasst, bestehend aus:
- Konfigurieren (306) der Lage des Satelliten und/oder der Satellitenantenne für den Empfang (12), damit die Empfangsantenne (12) gemäß einer Winkelposition der Bezugsausrichtung in Richtung der Bodenstation (82) zeigt;
- Konfigurieren (308) der zweiten Verstärkungsmittel (28) der Nutzlast mit einer vorbestimmten festen Verstärkung, die einem linearen Betriebsmodus auf mindestens dem Eingangsabschnitt des Verstärkers entspricht, der dem Uplink-Kanal (8) oder dem gesamten Verstärker (20) entspricht, wenn das aus der Bodenstation (82) und am Eingang des Verstärkers empfangene thermische Prüfrauschen einer durch die Bodenstation (82) emittierten Spektraldichte des thermischen Prüfrauschens gleich der spektralen Referenzdichte Dref entspricht;
- Konfigurieren (310) der ersten Verstärkungsmittel (86) der Bodenprüfstation (82), um im Eingang der Bodenantenne für das Senden (88) ein thermisches Prüfrauschen mit einem Band zu erzeugen, das das Empfangsband des Verstärkers abdeckt, und dessen spektrale Leistungsdichte gleich der spektralen Referenzdichte Dref ist, und Übertragen des thermischen Prüfrauschens durch die Bodenprüfstation (82) in dieser Konfiguration der ersten Verstärkungsmittel (86); dann
- Erfassen (312) mindestens einer repräsentativen Messung der im Eingang des Verstärkers mittels mindestens der einen entsprechenden empfangenen Leistungsmessung empfangenen Leistung während einer vorbestimmten Dauer,
entweder durch die Bodenprüfstation mittels des Downlink-Kanals, wenn eine Schnittzone (62) der Abdeckungsgebiete der Empfangsantenne und der Sendeantenne des Satelliten existiert und wenn sich die Bodenstation im Inneren der Schnittzone befindet; oder
durch entsprechende Fernmessungen der erfassten Leistung in einem Aufstellungsort des Verstärkers, wobei die Verstärkung linear ist und wobei zusätzlich die entsprechende Verstärkung bekannt ist.

3. Verfahren zur Kennzeichnung des Leistungsvermögens einer Nutzlast nach einem der Ansprüche 1 bis 2, wobei die Bandbreite des in Richtung des Satelliten emittierten thermischen Prüfrauschens zwischen 30 MHz und 3 GHz liegt oder zwischen 3 % und 10 % einer Mittenfrequenz des Sendefrequenzbands der Bodenprüfstation (82) oder des Empfangs der Nutzlast (4) liegt.

4. Verfahren zur Kennzeichnung des Leistungsvermögens einer Nutzlast nach einem der Ansprüche 1 bis 3, wobei das Sendefrequenzband der Bodenprüfstation (82) bzw. des Empfangsbands der Nutzlast (4) in den Bändern L, S, C, X, Q, V, Ku und Ka liegt.

5. Verfahren zur Kennzeichnung des Leistungsvermögens einer Nutzlast nach einem der Ansprüche 1 bis 4, wobei der erste Schwellenwert Ds1 des Rauschdichteverhältnisses von dem Empfangsfrequenzband der Nutzlast (4), der Umlaufbahn des Satelliten (6), der Größe der Sendeantenne (88) der Bodenprüfstation (82) und des G/T-Parameters der Nutzlast (4) des geprüften Satelliten (6) abhängt.

6. Verfahren zur Kennzeichnung des Leistungsvermögens einer Nutzlast nach einem der Ansprüche 1 bis 5, wobei die Kennzeichnung des Leistungsvermögens der Nutzlast des Satelliten in der Dienstumlaufbahn insgesamt gebildet wird durch:
- die Einzel- oder Multifrequenz-Kennzeichnung einer oder mehrerer Winkelverteilungen und/oder eines oder mehrerer Strahlungswinkelschnitte der Satellitenantenne für den Empfang (12), wenn der Verstärker der Nutzlast ein transparenter Verstärker oder ein regenerativer Verstärker ist;
- die lineare Verstärkungsantwort vom Eingangsanschluss zum Ausgangsanschluss des Verstärkers, wenn der Verstärker ein transparenter Verstärker ist, der in einem linearen Modus funktioniert, und wenn eine Schnittzone der Abdeckungsgebiete der Empfangsantenne und der Sendeantenne des Satelliten existiert, und wenn sich die Bodenstation dort befindet;
- die lineare Verstärkungsänderung des Verstärkers in Abhängigkeit von der Frequenz in dem Band des Verstärkers für eine festgelegte Verstärkung des Verstärkers;
- die Messung des Sättigungsflusses oder der Sättigungsflussdichte (SFD) des Satellitentransponders und die Messung der äquivalenten isotropen Strahlungsleistung (PIRE) der Nutzlast, wenn der Verstärker transparent ist;
- die G/T-Messung der Nutzlast mit oder ohne Sichtbarkeit des Downlink-Kanals von der Bodenstation aus;
- die Kennzeichnung der HF-Belastbarkeit der Nutzlast und/oder des Verbrauchs und/oder des Leistungsvermögens der Plattform, wenn die Nutzlast durch das in einer Konfiguration nahe den betrieblichen Anforderungen empfangene thermische Rauschen belastet wird, zum Beispiel gemäß einem Höchstwertverkehr oder einem über die Zeit veränderlichen Verkehr.

7. Verfahren zur Kennzeichnung des Leistungsvermögens einer Nutzlast nach einem der Ansprüche 1 bis 6, wobei
die Kennzeichnung der Nutzlast die Kennzeichnung einer Winkelverteilung oder von Winkelschnittänderungen der Richtschärfe der Satellitenantenne für den Empfang ist,
und das Verfahren (322) die Schritte umfasst, bestehend aus:
- Konfigurieren (324) der Lage des Satelliten und/oder der Satellitenantenne für den Empfang (12), damit die Satellitenantenne für Empfang (12) gemäß einer Winkelposition der Bezugsausrichtung in Richtung der Bodenprüfstation (82) zeigt;
- Konfigurieren (326) der zweiten Verstärkungsmittel der Nutzlast mit einer vorbestimmten festen Verstärkung, die einem linearen Betriebsmodus auf dem Eingangsabschnitt des Verstärkers entspricht, der dem Uplink-Kanal (8) oder dem gesamten Verstärker (20) entspricht, wenn das aus der Bodenstation (82) und im Eingang des Verstärkers empfangene thermische Prüfrauschen einer durch die Bodenstation (82) emittierten Spektraldichte des thermischen Prüfrauschens gleich der spektralen Referenzdichte Dref entspricht;
- Konfigurieren (328) der ersten Verstärkungsmittel (86) der Bodenstation (82), um im Eingang der Bodenantenne für das Senden ein thermisches Prüfrauschen mit einer Bandbreite größer oder gleich derjenigen des Empfangsbands des Verstärkers zu erzeugen, und dessen spektrale Leistungsdichte gleich der spektralen Referenzdichte Dref ist; dann
- Erzeugen (330) während einer vorbestimmten Dauer durch die Bodenstation des thermischen Prüfrauschens, das der Konfiguration der ersten Verstärkungsmittel (86) bei der spektralen Referenzdichte Dref entspricht, wenn die Satellitenantenne für den Empfang (12) gemäß der Richtung der Bezugsausrichtung auf die Bodenstation (82) zeigt; dann
- Messen (332) eines Referenzpegels, der der Richtung der Bezugsausrichtung des durch die Nutzlast (4) gemäß dem Downlink-Kanal (16) zurückübertragenen und durch die Bodenstation (82) von einer Bodenantenne für den Empfang (94) empfangenen Signals des thermischen Prüfrauschens entspricht, wenn eine Schnittzone (62) der Abdeckungsgebiete der Empfangsantenne und der Sendeantenne des Satelliten existiert und wenn sich die Bodenstation dort befindet, oder
von einer Fernmessung des Satelliten, die den an einem Aufstellungsort des Verstärkers empfangenen Leistungspegel liefert, wobei die Verstärkung linear ist und wobei zusätzlich die Verstärkung bis zu diesem Aufstellungsort bekannt ist; dann
- bezüglich der Richtung der Bezugsausrichtung ein Wegrichten (334) der Empfangsantenne über eine Gesamtheit von Winkelpositionen der Empfangsantennenfehlweisung bezüglich der Richtung der Bezugsausrichtung; und für jede Winkelposition der Fehlweisung,
* Erzeugen des thermischen Prüfrauschens am Boden während einer vorbestimmten Dauer, das das Empfangsband des Verstärkers abdeckt und der Konfiguration der ersten Verstärkungsmittel bei der Bezugsdichte Dref entspricht; und
* Messen der relativen Richtschärfe oder des relativen Gewinns der Satellitenantenne für den Empfang bezüglich des Referenzpegels über eine oder mehrere Frequenzen des Verstärkerbands während einer vorbestimmten Dauer, der der Winkelposition der Fehlweisung der Satellitenempfangsantenne von dem durch die Nutzlast gemäß dem Downlink-Kanal zurückübertragenen und durch die Bodenstation mittels einer Bodenantenne für Empfang empfangenen Signal des thermischen Prüfrauschens, wenn eine Schnittzone der Abdeckungsgebiete der Empfangsantenne und der Sendeantenne des Satelliten existiert und wenn sich die Bodenstation dort befindet, oder
einer Fernmessung des Satelliten entspricht, die den an einem Aufstellungsort des Verstärkers empfangenen Leistungspegel liefert, wobei die lineare Verstärkung und die Verstärkung bis zu diesem Aufstellungsort bekannt sind;
- Speichern (336) der gesteuerten Winkelabweichungen der Fehlweisung der Satellitenantenne für den Empfang (12) und der Messungen der relativen Richtschärfe oder des zugehörigen relativen Gewinns; dann
- Nachbilden (338) einer oder mehrerer Winkel verteilungen der Richtschärfeveränderung der Satellitenempfangsantenne und/oder eines oder mehrerer Winkeländerungsdiagramme der Richtschärfe der Satellitenantenne für den Empfang und/oder einer oder mehrerer Winkelschnittänderungen der Richtschärfe der Satellitenantenne für den Empfang basierend auf den gesteuerten Winkelabweichungen der Fehlweisung der Satellitenempfangsantenne und den Einzel- oder Multifrequenz-Messungen der zugehörigen relativen Richtschärfe oder des zugehörigen relativen Gewinns.

8. Verfahren zur Kennzeichnung des Leistungsvermögens einer Nutzlast nach einem der Ansprüche 1 bis 6, wobei der Verstärker ein transparenter Verstärker ist; und
die Kennzeichnung der Nutzlast die Kennzeichnung des Amplitudengangs des Verstärkers von seinem Eingangsendpunkt zu seinem Ausgangsendpunkt auf dem Empfangsband des Verstärkers gemäß einer vorbestimmten Verstärkungsregelung der zweiten Verstärkungsmittel (28) ist, für die der Verstärker (20) im linearen Modus arbeitet, wenn die Bodenprüfstation (82) ein thermisches Prüfrauschen erzeugt, dessen spektrale Leistungsdichte gleich der spektralen Referenzleistungsdichte Dref ist; und
das Verfahren (352) die Schritte umfasst, bestehend aus:
- Ausrichten (354) der Satellitenantenne für den Empfang (12) auf die Bodenprüfstation (82) gemäß einer Richtung der Bezugsausrichtung; dann
- Konfigurieren (356) der zweiten Verstärkungsmittel (28), um die Verstärkung des Verstärkers (20) auf den vorbestimmten Verstärkungswert festzulegen, der mit einer linearen Betriebsweise des Verstärkers (20) kompatibel ist, wenn die Bodenstation (82) das thermische Prüfrauschen bei der spektralen Referenzleistungsdichte Dref emittiert; und
- Konfigurieren (358) der ersten Verstärkungsmittel (86) der Bodenstation (82), um ein thermisches Rauschen im Eingang der Sendeantenne (88) zu erzeugen, das das Verstärkerband abdeckt und die spektrale Leistungsdichte des thermischen Prüfrauschens in Schritten vorbestimmter Dauer in einem Abschwächungsbereich bezüglich der spektralen Referenzdichte Dref zwischen 0 dB und einem Absenkungswert kleiner oder gleich dem ersten Schwellenwert Ds1 verändert (358); und
- korrelatives Messen (360) der Leistungen am Eingang des Verstärkers und der entsprechenden Leistungen am Ausgang des Verstärkers und Ableiten der Entwicklung der Verstärkung in Abhängigkeit von der Eingangsleistung des Verstärkers (20) auf der abgetasteten Gesamtheit der Leistungsdichten des durch die Station erzeugten thermischen Rauschens.

9. Verfahren zur Kennzeichnung des Leistungsvermögens einer Nutzlast nach einem der Ansprüche 1 bis 6, wobei
der Verstärker (20) ein transparenter Verstärker ist; und
die Kennzeichnung der Nutzlast die Kennzeichnung des frequenzabhängigen Amplitudengangs auf dem Gesamtband des Verstärkers (20) gemäß einer selben vorbestimmten Verstärkungsregelung ist, die auf die zweiten Verstärkungsmittel (28) angewendet wird, für die der Verstärker im linearen Modus arbeitet, wenn die Bodenstation ein thermisches Prüfrauschen erzeugt, dessen spektrale Leistungsdichte gleich der spektralen Referenzleistungsdichte Dref ist; und
das Verfahren (372) die Schritte umfasst, bestehend aus:
- Ausrichten (374) der Satellitenantenne für den Empfang (12) auf die Bodenprüfstation (82) gemäß einer Richtung der Bezugsausrichtung; dann
- Konfigurieren (376) der zweiten Verstärkungsmittel (28), um die Verstärkung des Verstärkers (20) auf einen vorbestimmten Verstärkungswert festzulegen, der mit einer linearen Betriebsweise des Verstärkers kompatibel ist, wenn die Bodenstation (82) das thermische Prüfrauschen mit der spektralen Referenzleistungsdichte emittiert; und
- Konfigurieren (378) der ersten Verstärkungsmittel (86) der Bodenprüfstation (82), um ein thermisches Rauschen im Eingang der Bodenantenne für das Senden (88) zu erzeugen, das das Empfangsband des Verstärkers (20) bei der spektralen Referenzleistungsdichte Dref abdeckt;
- korrelatives (380) Messen der in Abhängigkeit von der Frequenz durch die Bodenstation (82) mittels der Bodenantenne für den Empfang emittierten und empfangenen Spektraldichte über eine Gesamtheit von abgetasteten Frequenzen in Schritten vorbestimmter Dauer, wenn eine Schnittzone (62) der Abdeckungsgebiete der Empfangsantenne und der Sendeantenne des Satelliten existiert und wenn sich die Bodenstation dort befindet; dann
- Ableiten (384) der Verstärkungsänderung in Abhängigkeit von der Frequenz in dem Empfangsband des Verstärkers (20).

10. Verfahren zur Kennzeichnung des Leistungsvermögens einer Nutzlast nach einem der Ansprüche 1 bis 6, wobei
der Verstärker ein transparenter Verstärker (20) ist; und
die Kennzeichnung der Nutzlast die Kennzeichnung des Sättigungsflusses oder der Sättigungsflussdichte (SFD) des Verstärkers des Satelliten und/oder die Messung der äquivalenten isotropen Strahlungsleistung (PIRE) der Nutzlast ist; und
das Verfahren (402) die Schritte (404, 406, 408, 410, 412) umfasst, bestehend aus:
- Ausrichten (404) der Satellitenantenne für den Empfang (12) auf die Bodenprüfstation (82) gemäß einer Richtung der Bezugsausrichtung; dann
- Konfigurieren (406) der zweiten Verstärkungsmittel (28), um den Verstärker in einem linearen Verstärkungsbetrieb zu betreiben, wenn die spektrale Leistungsdichte des in den Eingang der Bodenantenne für das Senden (88) eingespeisten thermischen Prüfrauschens kleiner oder gleich der spektralen Referenzleistungsdichte Dref ist;
- Konfigurieren (408) der ersten Verstärkungsmittel (86) der Bodenstation (82), um ein thermisches Prüfrauschen im Eingang der Bodenantenne für das Senden (88) zu erzeugen, das das Empfangsband des Verstärkers (20) abdeckt und die spektrale Leistungsdichte des thermischen Prüfrauschens in Schritten vorbestimmter Dauer in einem Abschwächungsbereich bezüglich der spektralen Referenzdichte Dref zwischen 0 dB und einem Absenkungswert kleiner oder gleich dem ersten Schwellenwert Ds1 verändert; und
- über die abgetastete Gesamtheit der Leistungsdichten des durch die Bodenstation (82) erzeugten thermischen Rauschens erfolgendes korrelatives Messen (410) entweder der entsprechenden Eingangs- und Ausgangsleistungen des Verstärkers (20) mittels Satellitenfernmessungen, oder
der Eingangsleistungen des Verstärkers mittels Messung in Bezug auf die Bodenstation oder mittels der Satellitenfernmessung und der durch die Bodenstation mittels der Bodenempfangsantenne (94) empfangenen entsprechenden Leistungen, wenn eine Schnittzone (62) der Abdeckungsgebiete der Empfangsantenne und der Sendeantenne des Satelliten existiert und wenn sich die Bodenstation (82) in der Schnittzone (62) befindet, und
- Ableiten (412) der Entwicklung der äquivalenten isotropen Strahlungsleistung (PIRE) der Nutzlast in Abhängigkeit von der durch den Verstärker auf einem ersten Beobachtungsbereich empfangenen Eingangsleistung;
und/oder das Verfahren (402) die Schritte (414, 416, 418, 420) umfasst, bestehend aus:
- Konfigurieren (414) der ersten Verstärkungsmittel (86), um die Spektraldichte des im Eingang der Bodenantenne für das Senden (88) eingespeisten thermischen Prüfrauschens festzulegen und Abdecken des vollständigen Verstärkerbands bei der spektralen Referenzleistungsdichte Dref; dann
- Konfigurieren (416) der zweiten Verstärkungsmittel (28) des Verstärkers (20) durch Verändern der linearen Verstärkung des Verstärkers (20) in Schritten mit vorbestimmter Dauer in einem Verstärkungsbereich des Verstärkers zwischen dem ersten kleineren Verstärkungswert Gmin und dem zweiten größeren Verstärkungswert Gmax, um den Verstärker (20) in einem nichtlinearen Modus zu betreiben, in dem ein Hochleistungsverstärker, der einen Endpunkt der zweiten Verstärkungsmittel (28) bildet, komprimiert wird; und
- über die abgetastete Gesamtheit der linearen Verstärkungsregelung des Verstärkers erfolgendes korrelatives Messen (418) entweder der entsprechenden Eingangs- und Ausgangsleistungen des Verstärkers (20) mittels Satellitenfernmessungen, oder
der Eingangsleistungen des Verstärkers mittels Messung in Bezug auf die Bodenstation oder mittels Satellitenfernmessung und der entsprechenden, durch die Bodenstation (82) mittels der Bodenempfangsantenne (94) empfangenen Leistungen, wenn eine Schnittzone (62) der Abdeckungsgebiete der Empfangsantenne und der Sendeantenne des Satelliten existiert und wenn die Bodenstation (82) sich in der Schnittzone (62) befindet, und
- Ableiten (420) der Entwicklung der äquivalenten isotropen Strahlungsleistung (PIRE) der Nutzlast in Abhängigkeit von der Verstärkung des Verstärkers und der empfangenen Eingangsleistung im Eingang des Verstärkers, die einer Spektraldichte des am Boden emittierten thermischen Prüfrauschen gleich der spektralen Referenzdichte Dref und/oder der Sättigungsflussdichte (SFD) entspricht.

11. Verfahren einer Kennzeichnung des Leistungsvermögens einer Nutzlast nach einem der Ansprüche 1 bis 6, wobei
die Kennzeichnung der Nutzlast eine G/T-Messung (432) ist, wobei G den Antennengewinn bezeichnet und T die auf den Eingang des Verstärkers bezogene Rauschtemperatur bezeichnet; und
wenn der Verstärker transparent ist und wenn keine Schnittmenge zwischen der ansteigenden Abdeckung und der abfallenden Abdeckung existiert oder der Verstärker regenerativ ist,
wobei das Verfahren (432) die Schritte umfasst, bestehend aus:
- Ausrichten (434) der Satellitenantenne für den Empfang (12) auf die Bodenstation (82) gemäß einer Richtung der Bezugsausrichtung;
- die Übertragung von funktechnischen Signalen durch die Bodenstation (82) abschalten oder abgeschaltet lassen (436); dann
- Konfigurieren (438) der zweiten Verstärkungsmittel (28) des Verstärkers auf einen kompatiblen Verstärkungswert einer linearen Betriebsweise des Verstärkers und einer Messung des Rauschens mittels einer Satellitenfernmessung; dann
- Messen (440) des im Eingang des Verstärkers vorhandenen, dem Verstärker eigenen thermischen Rauschens N1 mittels der Eingangsfernmessung des Verstärkers; dann
- Aktivieren (442) der Bodenstation (82) und Konfigurieren der ersten Verstärkungsmittel (86), um ein thermisches Prüfrauschen zu erzeugen, dessen gemessene Spektraldichte am Boden größer oder gleich der Bezugsdichte Dref ist; dann
- Messen (444) eines aus der Bodenstation (82) und im Eingang des Verstärkers empfangenen thermischen Rauschens N2 in dem Empfangsband des Verstärkers mittels der Eingangsfernmessung des Verstärkers;
- Bestimmen (446) des G/T-Verhältnisses aus dem Verhältnis des empfangenen thermischen Rauschens N2 zu dem dem Verstärker eigenen thermischen Rauschen N1.

12. Verfahren einer Kennzeichnung des Leistungsvermögens einer Nutzlast nach einem der Ansprüche 1 bis 6, wobei
die Kennzeichnung der Nutzlast eine G/T-Messung ist, wobei G den Antennengewinn bezeichnet und T die auf den Eingang des Verstärkers bezogene Rauschtemperatur bezeichnet; und
wenn der Verstärker transparent ist und wenn eine Schnittmenge zwischen der ansteigenden Abdeckung und der abfallenden Abdeckung existiert,
wobei das Verfahren der G/T-Messung die Schritte umfasst, bestehend aus:
- Ausrichten (434) der Satellitenantenne für den Empfang (12) auf die Bodenstation (82) gemäß einer Richtung der Bezugsausrichtung
- die Übertragung von funktechnischen Signalen durch die Bodenstation (82) abschalten oder abgeschaltet lassen (436); dann
- Konfigurieren der zweiten Verstärkungsmittel (28) des Verstärkers auf einen kompatiblen Verstärkungswert einer linearen Betriebsweise des Verstärkers; dann
- Messen des dem Downlink-Kanal eigenen thermischen Rauschens N1; dann
- Aktivieren (442) der Bodenstation (82) und Konfigurieren der ersten Verstärkungsmittel (86), um ein thermisches Prüfrauschen zu erzeugen, dessen gemessene Spektraldichte am Boden größer oder gleich der Bezugsdichte Dref ist; dann
- Messen eines absteigenden empfangenen thermischen Rauschens N2; dann
- Bestimmen (446) des G/T-Verhältnisses aus dem Verhältnis des gemessenen thermischen Rauschens N2 zu dem dem Verstärker eigenen thermischen Rauschen N1.

13. System für die Kennzeichnung des Leistungsvermögens einer Nutzlast (4) eines Satelliten (6) in der Umlaufbahn auf einem Frequenzband und auf einem Uplink-Kanal (8),
wobei die Nutzlast (4) des Satelliten (6) eine erste Satellitenantenne für den Empfang (12) eines Uplink-Kanals (8), eine zweite Satellitenantenne für das Senden (14) eines Downlink-Kanals (16) und einen Breitbandverstärker (20) aufweist, der zwischen die erste Satellitenantenne für den Empfang (12) und die zweite Satellitenantenne für das Senden (14) geschaltet wird;
wobei der Verstärker (20) einen Hochfrequenzeingangsanschluss (24), der mit einem Ausgangsanschluss (26) der Satellitenantenne für den Empfang (12) verbunden ist, und zweite Verstärkungsmittel (28) aufweist, die konfiguriert sind, um auf einem Eingangsabschnitt des Verstärkers, der dem Uplink-Kanal (8) entspricht oder auf dem gesamten Verstärker (20) Signale in dem Frequenzband gemäß einem linearen Verstärkungsmodus und mit einer fernsteuerbaren festen Verstärkung inbegriffen in einem Verstärkungsbereich zu verstärken, der sich zwischen einer ersten kleineren Verstärkung Gmin und einer zweiten größeren Verstärkung Gmax ändert, und
wobei das System umfasst:
- eine Bodenprüfstation (82), die erste Hochfrequenzverstärkungsmittel (86) aufweist, und eine Bodenantenne für das Hochfrequenzsenden (88) mit einem Eingangsanschluss (90), der mit einem Ausgang (92) der ersten Verstärkungsmittel (86) verbunden ist;
- eine Infrastruktur für Fernsteuerung und Fernmessung (136) der Nutzlast und der Satellitenplattform, die durch eine von dem Satelliten (6) aus sichtbare Fernsteuerungs- und Fernmessungsstation (140) abgeschlossen wird; und
- einen Prüfstand (84), der mit der Bodenprüfstation und der Fernsteuerungs- und der Fernmessungsinfrastruktur verbunden und konfiguriert ist, das Verfahren der Kennzeichnung der Nutzlast zu realisieren, das nach einem der Ansprüche 1 bis 13 durch Koordinieren des Sendens der Befehle und des Empfangs der zu messenden Signale definiert wird und/oder der jeweils von der Bodenprüfstation und der Fernsteuerungs- und Fernmessungsstation gesendeten und empfangenen Fernmessungen;
wobei das System **dadurch gekennzeichnet ist, dass**:
die ersten konfigurierbaren Verstärkungsmittel (86) der Bodenstation (82) konfigurierbar sind, um im Eingang (90) der Bodenantenne für das Senden (88) ein thermisches Prüfrauschen mit einer Bandbreite größer oder gleich dem Empfangsband des Verstärkers zu erzeugen, und dessen spektrale Leistungsdichte bis zu einer spektralen Referenzleistungsdichte Dref einstellbar ist, sodass das Dichteverhältnis des von der Bodenprüfstation (82) empfangenen thermischen Prüfrauschens, wenn sie emittiert, gleich der spektralen Referenzdichte Dref ist und am Eingang (24) des Verstärkers (20) über die durch den Satelliten (6) nur im Inneren erzeugte Spektraldichte des thermisches Grundrauschens und des natürlichen thermischen Rauschens der Erde am Eingang (24) des Verstärkers größer oder gleich einem ersten Schwellenwert Ds1 gleich 10 dB ist.

14. System für die Kennzeichnung des Leistungsvermögens einer Nutzlast nach Anspruch 13, wobei der Prüfstand (84) umfasst:
- Erfassungsmittel (152) des durch die Satellitenantenne für das Senden auf dem Downlink-Kanal emittierten thermischen Rauschens während einer vorbestimmten Dauer, das durch die Bodenprüfstation empfangen wird, wenn eine Schnittzone (62) der Versorgungsgebiete der Empfangsantenne und der Sendeantenne des Satelliten existiert und wenn sich die Bodenstation im Inneren der Schnittzone und/oder der Fernmessungen des empfangenen thermischen Prüfrauschens in verschiedenen Aufstellungsorten des Verstärkers und der Fernmessungen der Plattform, repräsentativ für die HF-Belastbarkeit der Nutzlast und/oder des elektrischen Verbrauchs und/oder der thermischen Leistungen der Plattform, befindet, wenn die Nutzlast durch ein thermisches Prüfrauschen in einer Konfiguration nahe den betrieblichen Anforderungen, zum Beispiel derjenigen eines Höchstwertverkehrs oder eines über die Zeit veränderlichen Verkehrs, belastet wird;
- Fernsteuerungsmittel (154) der Nutzlast und/oder der Plattform des Satelliten in einer Dienstumlaufbahn während der vorbestimmten Dauer, um eine Winkelabweichung der Ausrichtung der Satellitenantenne für den Empfang bezüglich einer Richtung der Bezugsausrichtung der vorbestimmten Veränderung aufzuprägen und/oder um eine lineare Verstärkung des Verstärkers zu verändern, wenn er in einem linearen Verstärkungsmodus ist oder Ansteuern eines nichtlinearen Verstärkungsmodus des Verstärkers durch Aktivieren einer automatischen Verstärkungsregelungsschleife am Eingang eines Hochleistungsausgangsverstärkers;
- Aufzeichnungsmittel (156) der Veränderungen, die durch die Fernsteuerungsmittel (154) des Prüfstands (84) gesteuert werden;
- Korrelationsmittel (158), um die Messung des Signals durch die Satellitenantenne für das Senden auf der Abwärtsstrecke des Satelliten zu korrelieren, wenn eine Schnittzone (62) der Versorgungsgebiete der Empfangsantenne und der Sendeantenne des Satelliten existiert und wenn sich die Bodenstation dort befindet, und/oder der in verschiedenen Aufstellungsorten des Verstärkers empfangenen Fernmessungen des Prüfsignals; und/oder weitere Satellitenparameter in Bezug auf die Nutzlast, repräsentativ für die HF-Belastbarkeit der Nutzlast und der Leistungen hinsichtlich des Verbrauchs und thermischen Regelung der Plattform, und um die Veränderungen der gemessenen Parameter abzuleiten, die die Nutzlast oder die Plattform in Abhängigkeit von den an dem Satelliten gesteuerten Veränderungen kennzeichnen.

## Claims

1. Method of characterising the performance of a payload (4) of a satellite (6) in orbit using a test ground station (82),
the test ground station (82) comprising first radio-frequency amplification means (86), and a radio-frequency transmit ground antenna (88) with a first input port (90) of the antenna connected at the output with the first radio-frequency amplification means (86),
the payload (4) of the satellite (6) comprising a first receive satellite antenna (12) for the uplink (8), a second transmit satellite antenna (14) for the downlink (16), and a transponder (20) connected between the first receive satellite antenna (12) and the second transmit satellite antenna (14),
the transponder (20) comprising a second radio-frequency input port (24) connected to an output port (26) of the receive satellite antenna (12), and second amplification means (28), configured to amplify over an input portion of the uplink transponder or the whole of the transponder signals in a receive frequency band of the transponder (20), according to a linear amplification mode and with a fixed gain which can be remote-controlled included in a gain range varying between a first lower gain Gmin and a second higher gain Gmax,
the method being **characterised in that** it comprises a supply step (304) involving:
- providing (304) the first amplification means (86) which can be configured to generate at the input (90) of the transmit ground antenna (88) a test thermal noise having a bandwidth greater than or equal to the receive band of the transponder and the power spectral density of which can be adjusted to a test thermal noise reference power spectral density Dref such that the ratio of the spectral density of the test thermal noise, received from the test ground station (82) when the thermal noise spectral density which it transmits is equal to the reference spectral density Dref, and received at the input (24) of the transponder (20), to the minimum thermal noise spectral density generated by the satellite (6) alone internally and the natural thermal noise of the Earth at the input (24) of the transponder (20) is greater than or equal to a first threshold Ds1 equal to 10 dB.

2. Method of characterising performance of a payload according to claim 1,
in which a test bench (84) remote from or integrated into the test ground station (82) is configured to send and to receive, respectively, configuration telecommands to and telemetry measurements from the satellite (4) via a telecommand and telemetry measurement infrastructure (138), ending at a telecommand and telemetry measurement station (140) visible from the satellite (6), and to send to and to receive from the test ground station (82) commands of first amplification means (86) and the test thermal noise retransmitted by the satellite (4) with or without processing,
the method further comprising the steps involving:
- configuring (306) the attitude of the satellite and/or of the receive satellite antenna (12) so that the receive antenna (12) points toward the ground station (82) according to a reference pointing angular position;
- configuring (308) the second amplification means (28) of the payload at a predetermined fixed gain which corresponds to a linear mode of operation over at least the input portion of the transponder corresponding to the uplink (8) or the whole of the transponder (20) when the test thermal noise received from the ground station (82) and at the input of the transponder corresponds to a test thermal noise spectral density transmitted by the ground station (82) equal to the reference spectral density Dref;
- configuring (310) the first amplification means (86) of the test ground station (82) to generate at the input of the transmit ground antenna (88) a test thermal noise having a band covering the receive band of the transponder and the power spectral density of which is equal to the reference spectral density Dref, and to have the test thermal noise transmitted by the test ground station (82) in this configuration of the first amplification means (86); then
- during a predetermined time period, acquiring (312) at least one measurement representing the power received at the input of the transponder via at least one corresponding received power measurement
either by the test ground station via the downlink when there exists an area (62) of intersection of the coverage areas of the receive antenna and the transmit antenna of the satellite and the ground station is inside said intersection area; or
by corresponding telemetry measurements of the power picked up at a location of the transponder where the amplification is linear and where the corresponding gain is incidentally known.

3. Method of characterising the performance of a payload according to any one of claims 1 to 2, wherein the bandwidth of the test thermal noise transmitted to the satellite is between 30 MHz and 3 GHz or between 3% and 10% of a central frequency of the transmit frequency band of the test ground station (82) or the receive frequency band of the payload (4).

4. Method of characterising the performance of a payload according to any one of claims 1 to 3, in which the transmit frequency band of the test ground station (82) or the receive band of the payload (4) is in the bands L, S, C, X, Q, V, Ku and Ka, respectively.

5. Method of characterising the performance of a payload according to any one of claims 1 to 4, in which the first noise density ratio threshold Ds1 depends on the receive frequency band of the payload (4), the orbit of the satellite (6), the size of the transmit antenna (88) of the test ground station (82) and the G/T parameter of the payload (4) of the satellite (6) under test.

6. Method of characterising the performance of a payload according to any one of claims 1 to 5, in which the characterisation of the performance of the payload of the satellite in service orbit is included within the set formed by:
- the single-frequency or multi-frequency characterisation of one or more radiation angular diagrams and/or of one or more radiation angular sections of the receive antenna (12) of the satellite when the payload transponder is a transparent transponder or a regenerative transponder;
- the linear gain response from the input port to the output port of the transponder when the transponder is a transparent transponder operating in a linear mode and when there exists an area of intersection of the coverage areas of the receive antenna and of the transmit antenna of the satellite and the ground station is in the said area of intersection;
- the variation of the linear gain of the transponder as a function of the frequency in the band of the transponder for a fixed gain of the transponder;
- the measurement of the saturating flux or of the saturating flux density (SFD) of the transponder of the satellite and the measurement of the effective isotropic radiated power (EIRP) of the payload when the transponder is transparent;
- the measurement of the G/T of the payload with or without visibility of the downlink from the ground station;
- the characterisation of the RF power behaviour of the payload and/or the consumption and/or the performance of the platform when the payload is loaded by the thermal noise received in a configuration close to the operational conditions, for example, in accordance with a maximum traffic or a traffic variable over time.

7. Method of characterising the performance of a payload according to any one of claims 1 to 6, in which
the characterisation of the payload is the characterisation of an angular diagram or of angular sections of variation of the directivity of the receive satellite antenna,
and the method (322) comprises the steps involving:
- configuring (324) the attitude of the satellite and/or of the receive satellite antenna (12) so that the receive satellite antenna (12) points toward the test ground station (82) according to a reference pointing angular position;
- configuring (326) the second amplification means of the payload at a predetermined first fixed gain which corresponds to a linear mode of operation over the input portion of the transponder corresponding to the uplink (8) or the whole of the transponder (20) when the test thermal noise received from the ground station (82) and at the input of the transponder corresponds to a test thermal noise spectral density transmitted by the ground station (82) equal to the reference spectral density Dref;
- configuring (328) the first amplification means (86) of the ground station (82) to generate at the input of the transmit ground antenna a test thermal noise having a bandwidth greater than or equal to that of the receive band of the transponder and the power spectral density of which is equal to the reference spectral density Dref; then
- generating (330) during a predetermined time period by means of the ground station the test thermal noise corresponding to the configuration of the first amplification means (86) at the reference spectral density Dref when the receive satellite antenna (12) points to the ground station (82) according to the reference pointing direction; then
- measuring (332) a reference level corresponding to the reference pointing direction from the test thermal noise signal retransmitted by the payload (4) in accordance with the downlink (16) and received by the ground station (82) via a receive ground antenna (94) when there exists an area of intersection (62) of the coverage areas of the receive antenna and of the transmit antenna of the satellite and the ground station is in the said intersection area, or
from a telemetry measurement from the satellite supplying the power level received at a location of the transponder at which the amplification is linear and at which the gain as far as that location is incidentally known; then
- depointing (334) the receive antenna relative to the reference pointing direction over a set of depointing angular positions of the receive antenna relative to the reference pointing direction, and, for each depointing angular position,
* generating on the ground during a predetermined time period the test thermal noise covering the receive band of the transponder and corresponding to the configuration of the first amplification means at the reference density Dref; and
* measuring during a predetermined time period on one or more frequencies of the band of the transponder the relative directivity or the relative gain of the receive satellite antenna relative to the reference level corresponding to the depointing angular position of the receive satellite antenna, based on the test thermal noise signal retransmitted by the payload in accordance with the downlink and received by the ground station via a receive ground antenna when there exists an area of intersection of the coverage areas of the receive antenna and of the transmit antenna of the satellite and the ground station is in the said intersection area, or
based on a telemetry measurement of the satellite supplying the receive power level at a location of the transponder at which the amplification is linear and the gain as far as that location is known;
- recording (336) the commanded depointing angular offsets of the receive satellite antenna (12) and the associated relative directivity or relative gain measurements; then
- from the commanded depointing angular offsets of the receive satellite antenna and the associated single-frequency or multi-frequency relative directivity or relative gain measurements, reconstituting (338) one or more angular diagrams of variation of the directivity of the receive satellite antenna and/or one or more angular sections of variation of the directivity of the receive satellite antenna.

8. Method of characterising the performance of a payload according to any one of claims 1 to 6, in which the transponder is a transparent transponder; and
the characterisation of the payload is the characterisation of the gain response of the transponder from its input end to its output end over the receive band of the transponder following a predetermined gain command of the second amplification means (28) for which the transponder (20) operates in linear mode when the test ground station (82) generates a test thermal noise, the power spectral density of which is equal to the reference power spectral density Dref; and
the method (352) comprises the steps involving:
- pointing (354) the receive satellite antenna (12) at the test ground station (82) according to a reference pointing direction; then
- configuring (356) the second amplification means (28) to fix the gain of the transponder (20) at the predetermined gain value compatible with linear operation of the transponder (20) when the ground station (82) transmits the test thermal noise at the reference power spectral density Dref; and
- configuring (358) the first amplification means (86) of the ground station (82) to generate a thermal noise at the input of the transmit antenna (88) covering the band of the transponder and causing (358) the power spectral density of the test thermal noise to be varied in steps of a predetermined duration in a range of attenuation relative to the reference spectral density Dref between 0 dB and a backoff value less than or equal to the first threshold Ds1; and
- over the swept set of the power densities of the thermal noise generated by the station, correlatively measuring (360) the powers at the input of the transponder and the corresponding powers at the output of the transponder and deducing therefrom the evolution of the gain as a function of the input power of the transponder (20).

9. Method of characterising the performance of a payload according to any one of claims 1 to 6, in which
the transponder (20) is a transparent transponder; and
the characterisation of the payload is the characterisation of the frequency response of the gain over the entire band of the transponder (20) following the same predetermined gain command applied to the second amplification means (28) for which the transponder operates in linear mode when the ground station generates a test thermal noise, the power spectral density of which is equal to the reference power spectral density Dref; and
the method (372) comprises the steps involving:
- pointing (374) the receive satellite antenna (12) at the test ground station (82) according to a reference pointing direction; then
- configuring (376) the second amplification means (28) to fix the gain of the transponder (20) at a predetermined gain value compatible with linear operation of the transponder when the test ground station (82) transmits the test thermal noise at the reference power spectral density; and
- configuring (378) the first amplification means (86) of the test ground station (82) to generate a thermal noise at the input of the transmit ground antenna (88) covering the receive band of the transponder (20) at the reference power spectral density Dref;
- over a set of frequencies swept in steps of a predetermined duration, correlatively measuring (380) the transmitted and received spectral densities as a function of the frequency by the ground station (82) via the receive ground antenna when there exists an area (62) of intersection of the coverage areas of the receive antenna and of the transmit antenna of the satellite and the ground station is in the said intersection area; then
- deducing (384) therefrom the gain variation as a function of the frequency in the receive band of the transponder (20).

10. Method of characterising the performance of a payload according to any one of claims 1 to 6, in which
the transponder is a transparent transponder (20); and
the characterisation of the payload is the characterisation of the saturating flux or of the saturating flux density (SFD) of the transponder of the satellite and/or the measurement of the EIRP (effective isotropic radiated power) of the payload; and
the method (402) comprises the steps (404, 406, 408, 410, 412) involving:
- pointing (404) the receive antenna (12) of the satellite at the ground station (82) according to a reference pointing direction; then
- configuring (406) the second amplification means (28) to cause the transponder to operate in a linear amplification system when the power spectral density of the test thermal noise injected at the input of the transmit ground antenna (88) is less than or equal to the reference power spectral density Dref;
- configuring (408) the first amplification means (86) of the ground station (82) to generate a test thermal noise at the input of the transmit ground antenna (88) covering the receive band of the transponder (20) and causing the test thermal noise power spectral density to vary in steps of predetermined duration in a range of attenuation relative to the reference spectral density Dref between 0 dB and a backoff value less than or equal to the first threshold Ds1; and
- over the swept set of power densities of the thermal noise generated by the ground station (82) correlatively measuring (410) either the corresponding input and output powers of the transponder (20) via the satellite telemetry measurements, or
the input powers of the transponder via measurement at the ground station or via the satellite telemetry measurement and the corresponding powers received by the ground station via the receive ground antenna (94) when there exists an area (62) of intersection of the coverage areas of the receive antenna and the transmit antenna of the satellite and the ground station (82) is in said intersection area (62), and
- deducing (412) therefrom the evolution of the EIRP (effective isotropic radiated power) of the payload as a function of the input power received by the transponder over a first observation range;
and/or the method (402) comprises the steps (414, 416, 418, 420) involving:
- configuring (414) the first amplification means (86) to fix the spectral density of the test thermal noise injected at the input of the transmit ground antenna (88) and covering the total band of the transponder at the reference power spectral density Dref; then
- configuring (416) the second amplification means (28) of the transponder (20) by causing the linear gain of the transponder (20) to vary in steps of predetermined duration in a range of gains of the transponder between the first lower gain value Gmin and the second higher gain value Gmax in order to cause the transponder (20) to operate in a non-linear mode in which a high-power amplifier forming one end of the second amplification means (28) is compressed; and
- over the swept set of the linear gain commands of the transponder correlatively measuring (418) either the corresponding input and output powers of the transponder (20) via the satellite telemetry measurements,
or the input powers of the transponder via measurement at the ground station or via the satellite telemetry measurement and the corresponding powers received by the ground station (82) via the receive ground antenna (94) when there exists an area (62) of intersection of the coverage areas of the receive antenna and of the transmit antenna of the satellite and the ground station (82) is in said area (62) of intersection, and
- deducing (420) therefrom the evolution of the effective isotropic radiated power (EIRP) of the payload as a function of the gain of the transponder and the input power received at the input of the transponder corresponding to a spectral density of the test thermal noise transmitted to the ground equal to the reference spectral density Dref and/or the saturating flux density (SFD).

11. Method of characterising the performance of a payload according to any one of claims 1 to 6, in which
the characterisation of the payload is a measurement (432) of the G/T in which G designates the gain of the antenna and T designates the noise temperature returned to the input of the transponder; and
when the transponder is transparent and there exists no intersection between the uplink coverage and the downlink coverage or the transponder is regenerative,
the method (432) comprises the steps involving:
- pointing (434) the receive antenna (12) of the satellite at the ground station (82) according to a reference pointing direction;
- switching off or leaving switched off (436) the transmission of radio-electric signals by the ground station (82); then
- configuring (438) the second amplification means (28) of the transponder at a gain value compatible with linear operation of the transponder and a measurement of noise via a satellite telemetry measurement; then
- measuring (440) the thermal noise N1 inherent to the transponder present at the input of the transponder via the input telemetry measurement of the transponder; then
- activating (442) the ground station (82) and configuring the first amplification means (86) to generate a test thermal noise, the spectral density of which measured on the ground is greater than or equal to the reference density Dref; then
- measuring (444) a received thermal noise N2 from the ground station (82) and at the input of the transponder in the receive band of the transponder via the input telemetry measurement of the transponder;
- determining (446) the ratio G/T from the ratio of the received thermal noise N2 to the thermal noise N1 inherent to the transponder.

12. Method of characterising the performance of a payload according to any one of claims 1 to 6, in which
the characterisation of the payload is a measurement of the G/T in which G designates the gain of the antenna and T designates the noise temperature returned to the input of the transponder; and
when the transponder is transparent and there exists an intersection between the uplink coverage and the downlink coverage,
the method of measuring the G/T comprises the steps involving:
.- pointing (434) the receive antenna (12) of the satellite at the ground station (82) according to a reference pointing direction;
.- switching off or leaving switched off (436) the transmission of radio-electric signals by the ground station (82); then
- configuring the second amplification means (28) of the transponder at a gain value compatible with linear operation of the transponder; then
- measuring the inherent thermal noise N1 on the downlink; then
- activating (442) the ground station (82) and configuring the first amplification means (86) to generate a test thermal noise, the spectral density of which measured on the ground is greater than or equal to the reference density Dref; then
- measuring a thermal noise N2 received on the downlink; then
- determining (446) the ratio G/T from the ratio of the measured thermal noise N2 to the inherent thermal noise N1 of the transponder.

13. System for characterising the performance of a payload (4) of a satellite (6) in orbit over a frequency band and on an uplink (8),
the payload (4) of the satellite (6) comprising a first receive satellite antenna (12) for the uplink (8), a second transmit satellite antenna (14) for the downlink (16), and a wide-band transponder (20) connected between the first receive satellite antenna (12) and the second transmit satellite antenna (14);
the transponder (20) comprising a radio-frequency input port (24) connected to an output port (26) of the receive satellite antenna (12), and second amplification means (28) which are configured to amplify over an input portion of the transponder corresponding to the uplink (8) or over the whole of the transponder (20) signals in the frequency band according to a linear amplification mode and with a fixed gain which can be telecommanded and which is included in a gain range varying from a first lower gain Gmin and a second higher gain Gmax, and
the system comprising:
- a test ground station (82) comprising first radio-frequency amplification means (86) and a radio-frequency transmit ground antenna (88) with an input port (90) connected to an output (92) of the first amplification means (86);
- a telecommand and telemetry measurement infrastructure (136) of the payload and of the satellite platform terminated by a telecommand and telemetry measurement station (140) visible from the satellite (6); and
- a test bench (84) connected to the test ground station and to the telecommand and telemetry measurement infrastructure configured to implement the method of characterising the payload defined according to any one of claims 1 to 13 by coordinating the sending of commands and the reception of signals to be measured and/or telemetry measurements sent and received to/from the test ground station and the telecommand and telemetry measurement station, respectively;
the system being **characterised in that**:
the first amplification means (86) of the ground station (82) can be configured to generate at the input (90) of the transmit ground antenna (88) a test thermal noise having a bandwidth greater than or equal to the receive band of the transponder and the power spectral density of which can be adjusted to a reference power spectral density Dref such that the ratio of the density of the test thermal noise received from the test ground station (82) when it transmits is equal to the reference spectral density Dref, and received at the input (24) of the transponder (20), to the minimum thermal noise spectral density generated by the satellite (6) alone internally and by the natural thermal noise of the Earth at the input (24) of the transponder, is greater than or equal to a first threshold Ds1 equal to 10 dB.

14. System for characterising the performance of a payload according to claim 13, in which the test bench (84) comprises
- means (152) for acquiring during a predetermined time period the thermal noise transmitted by the transmit satellite antenna on the downlink received by the test ground station when there exists an area (62) of intersection of the coverage areas of the receive antenna and of the transmit antenna of the satellite and the ground station is inside said intersection area, and/or telemetry measurements of the test thermal noise received at various locations of the transponder, and telemetry measurements from the platform representing the RF power behaviour of the payload and/or the electrical consumption and/or the thermal performance of the platform when the payload is loaded by a test thermal noise in a configuration close to the operational conditions, for example that of a maximum traffic or a traffic variable over time;
- means (154) for telecommanding the payload and/or the platform of the satellite in service orbit, during said predetermined time period, to impart a pointing angular offset of the receive satellite antenna relative to a reference pointing direction of predetermined variation and/or to vary a linear gain of the transponder when it is in a linear amplification mode or to command a non-linear amplification mode of the transponder by activating an automatic gain control loop at the input of an output high-power amplifier;
- means (156) for recording variations commanded by the telecommand means (154) of the test bench (84);
- correlation means (158) for correlating the measurement of the signal by the transmit satellite antenna on the downlink of the satellite when there exists an area (62) of intersection of the coverage areas of the receive antenna and of the transmit antenna of the satellite and the ground station is at that location, and/or telemetry measurements of the test signal received at various locations of the transponder; and/or other satellite parameters related to the payload representing the RF power behaviour of the payload, and performance in terms of consumption and thermal regulation of the platform, and for deducing therefrom the measured parameter variations characterising the payload or the platform as a function of the variations commanded to the satellite.
